(19) Europäisches Patentamt
European Patent Office
Office européen des brevets

(11) **EP 2 093 547 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(51) Int Cl.:
**G01J 3/28** (2006.01)

(21) Anmeldenummer: **09000266.8**

(22) Anmeldetag: **10.01.2009**

(54) **Verfahren zum Bestimmen von Temperatur-, und Druck-und Konzentrationsprofilen beliebiger, vorzugsweise gasförmiger Medien und Hardware-Einrichtung zur Durchführung des Verfahrens**

Method for setting temperature, pressure and concentration profiles of any, preferable gaseous media and hardware device for carrying out the method

Procédé de détermination de profils de température, de pression et de concentration de milieux quelconques, de préférence gazeux et dispositif matériel destiné à exécuter le procédé

(84) Benannte Vertragsstaaten:
AT BE BG CH CY CZ DE DK EE ES FI FR GB GR HR HU IE IS IT LI LT LU LV MC MK MT NL NO PL PT RO SE SI SK TR

(30) Priorität: **21.02.2008 DE 102008010229**

(43) Veröffentlichungstag der Anmeldung:
**26.08.2009 Patentblatt 2009/35**

(73) Patentinhaber: **Deutsches Zentrum für Luft- und Raumfahrt e.V.**
**51147 Köln (DE)**

(72) Erfinder: **Schreier, Franz, Dr.**
**82152 Planegg (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
- SCHREIER ET AL: "The Voigt and complex error function: A comparison of computational methods" JOURNAL OF QUANTITATIVE SPECTROSCOPY AND RADIATIVE TRANSFER, ELSEVIER SCIENCE, OXFORD, GB, Bd. 48, Nr. 5-6, 1. November 1992 (1992-11-01), Seiten 743-762, XP024425791 ISSN: 0022-4073 [gefunden am 1992-11-01]
- HUI A K ET AL: "Rapid computation of the Voigt and complex error functions" JOURNAL OF QUANTITATIVE SPECTROSCOPY AND RADIATIVE TRANSFER, ELSEVIER SCIENCE, OXFORD, GB, Bd. 19, Nr. 5, 1. Mai 1978 (1978-05-01), Seiten 509-516, XP024425065 ISSN: 0022-4073 [gefunden am 1978-05-01]
- HUMLICEK ET AL: "Optimized computation of the voigt and complex probability functions" JOURNAL OF QUANTITATIVE SPECTROSCOPY AND RADIATIVE TRANSFER, ELSEVIER SCIENCE, OXFORD, GB, Bd. 27, Nr. 4, 1. April 1982 (1982-04-01), Seiten 437-444, XP024722588 ISSN: 0022-4073 [gefunden am 1982-04-01]
- SCHREIER F ET AL: "Optimized implementations of rational approximations-a case study on the Voigt and complex error function" COMPUTER PHYSICS COMMUNICATION, ELSEVIER SCIENCE PUBLISHERS B.V., AMSTERDAM, NL, Bd. 179, Nr. 7, 1. Oktober 2008 (2008-10-01), Seiten 457-465, XP025348954 ISSN: 0010-4655 [gefunden am 2008-04-24]

## Beschreibung

Die Erfindung betrifft ein Verfahren zum Bestimmen von Temperatur-, Druck- und Konzentrationsprofilen beliebiger, vorzugsweise gasförmiger Medien gemäß dem Oberbegriff des Patentanspruchs 1. Das Verfahren wird auf einer Hardware-Einrichtung ausgeführt.

Die Erfindung betrifft auch eine Hardware-Einrichtung zur Durchführung des Verfahrens.

Die Messung des Zustands gasförmiger oder ähnlicher Medien, charakterisiert durch Druck, Temperatur, Zusammensetzung und dergleichen, einschließlich ihrer räumlichen Verteilung und zeitlichen Variabilität, gehört zu den gebräuchlichen Aufgaben in wissenschaftlichem, industriellem und behördlichem Bereich.

Die Bestimmung der Abgase von Verbrennungsprozessen sowie anderer chemischer Prozesse ist für die Steuerung und Optimierung der betreffenden Anlagen bzw. Motoren oder Flugzeugtriebwerke (Wirkungsgrad) und für die Überwachung hinsichtlich unerwünschter oder verbotener Komponenten (Abgasverordnungen, Immissionsschutzauflagen, etc.) von großer Bedeutung. Verbrennungsprodukte, wie z.B. Kohlendioxid, Kohlenmonoxid, Methan sowie Ruß, sind umwelt- und/oder gesundheitsschädlich und ihre Erfassung ist daher sowohl für (Gesundheits-, Umwelt-, ...) Behörden als auch für wissenschaftliche Fragestel lungen (Klimaforschung) wichtig. Vielfach ist die Gas-Temperatur eine entscheidende Größe, da sie sowohl die Effizienz der Verbrennungsprozesse als auch die Zusammensetzung der Abgase beeinflusst.

Die Temperatur ist zudem eine zentrale Variable der Erdatmosphäre und die Kenntnis der räumlichen Temperaturverteilung (Höhe, Länge und Breite) auf der Erde stellt für die numerische Wettervorhersage eine wesentliche Voraussetzung dar. Die Verbesserungen in der Wettervorhersage beruhen außer auf den Fortschritten in der Datenverarbeitung (umfangreicheres Speichervermögen und höhere Rechengeschwindigkeit) wesentlich auf der verbesserten Erfassung des Zustands der Atmosphäre durch eine zunehmende Zahl meteorologischer Satelliten, die neben Temperaturen vor allem auch Wasser bzw. Wasserdampf in der Atmosphäre erfassen.

Die Einführung einer neuen Generation meteorologischer Satelliten mit Infrarot- und Mikrowellen-Sensoren, wie AIRS, IASI oder AMSU, hat die Genauigkeit und Zeitspanne für verlässliche Vorhersagen signifikant erhöht. Die mit der höheren spektralen und räumlichen Auflösung dieser Instrumente verbundene größere Datenmenge führt jedoch zu einem deutlich höheren Rechenaufwand bei der Auswertung.

Die diesbezüglich verwendeten Messverfahren können im Wesentlichen in zwei große Klassen eingeteilt werden, nämlich zum einen in Probe nehmende (in situ) Messungen und zum anderen in berührungslose Fernerkundungsverfahren.

Bei den Probe nehmenden Verfahren wird an einem definierten Ort innerhalb des zu untersuchenden Mediums eine Probe entnommen und anschließend deren Zusammensetzung, z.B. durch Gaschromatografie oder Massenspektrometrie, analysiert. Druck- und/oder Temperaturmessungen werden durch entsprechende Fühler direkt am betrachteten Ort vorgenommen. Mit einer möglichst dichten Abtastung des Mediums lässt sich damit eine gute räumliche Auflösung erzielen. Probe nehmende Messverfahren weisen jedoch eine Reihe von Nachteilen auf. Sie sind häufig gasspezifisch.

Darüber hinaus kann bei zeitlich variablen Medien, z.B. bei Verbrennungsabgasen, eine ortsauflösende Messung nur durch den gleichzeitigen Einsatz einer Vielzahl von Probe nehmenden Sensoren erreicht werden. Die Zahl der Sensoren ist jedoch beschränkt, um eine Verfälschung des Gasmediums durch die Fühler zu vermeiden.

Im Falle instabiler Gase muss außerdem die Zusammensetzung unmittelbar nach bzw. zeitlich mit der Probennahme ermittelt werden. Überdies sind Probe nehmende Verfahren nicht geeignet zur Messung in schwer bzw. nicht zugänglichen Bereichen, z.B. bei sehr heißen Gasen und insbesondere bei chemisch und/oder radioaktiv kontaminierten Gasen. Gerade im wissenschaftlichen Bereich kann eine Probennahme unter Umständen mit extremen Kosten bzw. äußerst hohem technischen Aufwand verbunden sein, beispielsweise bei Untersuchungen der hohen Erdatmosphäre.

Neben Probe nehmenden Verfahren haben sich Fernerkundungsverfahren etabliert, die auf der Messung der vom Gas emittierten und/oder gestreuten elektromagnetischen Strahlung im Mikrowellenspektralbereich, infraroten, sichtbaren oder ultravioletten Spektralbereich beruhen. Bei geeigneter Wahl des Spektralbereichs und der spektralen Auflösung sowie der Messgeometrie ermöglicht die spektrometrische Strahlungsmessung die räumlich aufgelöste Bestimmung von Druck $p$, Temperatur $T$ und Gas-Konzentrationen $\rho$ sowohl homogener als auch inhomogener Medien beliebiger Zusammensetzung.

Besonders für heiße Gase sind infrarot-spektroskopische Verfahren geeignet, da die interessierenden Gase hier einerseits signifikante spektrale Absorptionseigenschaften aufweisen, andererseits aber bei höheren Temperaturen auch starke thermische Emissionen zeigen. Eine hohe spektrale Auflösung ermöglicht die Trennung der spektralen Signaturen der verschiedenen Gase.

Im Falle der Atmosphären-Fernerkundung mittels bodengestützter, aufwärts blickender oder satellitengestützter, abwärts blickender Infrarot- und Mikrowellen-Spektrometer ist zudem eine hohe spektrale Auflösung für die Bestimmung von Temperatur und Konzentrationsverteilungen als Funktion der Höhe erforderlich. Die Druckverbreiterung der Spektrallinien ist proportional zum Atmosphärendruck, welcher in der Troposphäre und Stratosphäre näherungsweise exponentiell mit der Höhe abnimmt. Beiträge im Linienzentrum bzw. in den Linienflügeln stammen daher aus den oberen bzw. unteren Atmosphärenschichten, so dass sich damit eine Zuordnung von Frequenz (bzw. Wellenzahl bzw. Wellenlängen) zu Höhen ergibt.

Sowohl für die Fernerkundungsmessung von Gasen mit beliebiger Zusammensetzung im industriellen Bereich (Abgase, Flugzeugemissionen, Schornsteine, etc.) als auch in der Atmosphären-Fernerkundung haben sich in erster Linie Fourier-Transform-Infrarot(FTIR)-Spektrometer bewährt. FTIR-Spektrometer liefern Absorptions- oder Emissionsspektren (Transmission $T(v)$ bzw. Strahldichte = Intensität $I(v)$) als Funktion der Wellenzahl $v$ (äquivalent zu Frequenz und Wellenlänge, $v = f/c = 1/\lambda$), die vom Zustand des Gases abhängig sind. FTIR-Spektrometer ermöglichen die Messung von Spektren in relativ großen Spektralbereichen (typisch beispielsweise $v = 500 - 3000$ cm$^{-1}$ bzw. $\lambda = 3 - 20$ $\mu$m mit hoher spektraler Auflösung $\delta v$, so dass die Absorption/Emission einer Vielzahl von Gasen gleichzeitig erfasst werden kann.

In allen vorstehend genannten Anwendungsfeldern ist neben der Temperatur auch der Wasserdampf eine wichtige Zielgröße. In der Atmosphären- und Klimaforschung wie auch bei allen Verbrennungsprozessen ist zudem Kohlendioxid wichtig. Weitere nennenswerte Gase umfassen Kohlenmonoxid, Schwefeldioxid, Methan, Ozon, usw. $H_2O$ absorbiert nahezu im gesamten infraroten Spektralbereich. $CO_2$ kann insbesondere in den Bereichen um 4,2 $\mu$m und 15 $\mu$m nachgewiesen werden, CO im Bereich 4,4 - 5 $\mu$m. Für die Fernerkundung von Aerosolen oder Wolken müssen wegen ihrer breitbandigen Absorptionseigenschaften größere Spektralbereiche erfasst werden.

Die Bestimmung der Gasparameter erfolgt in der Regel mit Hilfe einer Gauß'schen Ausgleichsrechnung (Regression, "Least Squares"), welche auf der Anpassung eines simulierten Modell-spektrums $I_{mod}(v)$ an das gemessene Spektrum $I_{obs}(v)$ beruht (analog für Transmissionsspektren).

Werden mehrere Spektren simultan gemessen, z.B. mehrere Winkel zur räumlichen Erfassung oder Transmissions- und Emissionsspektrum, so können diese im Sinne eines "global fit" zu einem Messvektor konkateniert und gemeinsam ausgewertet werden. Im Folgenden soll der Einfachheit halber ohne Einschränkung der Allgemeinheit von einem Messspektrum $\overline{Y}$ der Länge M gesprochen werden.

Zu beachten ist, dass das vom Spektrometer gemessene Spektrum keine kontinuierliche Funktion der Wellenzahl bildet, sondern nur an einem Satz von $M$ diskreten (nicht notwendig äquidistanten) Stützstellen gegeben ist, welche den sogenannten Messvektor bilden: $\bar{I}_{obs} = (I_{obs}(v_1), I_{obs}(v_2),...,I_{obs}(v_M))$ und analog für die Transmission $\overline{T}_{obs}$ im Fall von Absorptionsspektroskopie. FTIR-Spektroskopie liefert in der Regel Strahldichte bzw. Transmissionsspektren auf einem äquidistanten Wellenzahlgitter mit $v_i = v_1 + (i - 1)\delta v$ mit $i = 1,...,M$.

Die gesuchten Zustandsgrößen des Gasmediums sind Funktionen des Orts, also Temperatur $T(\bar{r})$ usw. In vielen Fällen genügt es, für die Auswertung des gemessenen Spektrums die Variabilität nur in einer oder zwei Raumdimensionen zu betrachten, beispielsweise im Falle der Atmosphären-Fernerkundung die Höhen-Abhängigkeit $T(z)$ usw. Für die numerische Implementierung der Auswertung ist in jedem Fall eine Diskretisierung der gesuchten Zustandsgröße(n) erforderlich, z.B. durch Entwicklung der gesuchten Funktion T(z) nach einem geeigneten Funktionensatz

$$T(z) \;=\; \sum_{i=1}^{N} x_i \phi_i(z) \;, \qquad\qquad (1)$$

wobei dann die Entwicklungskoeffizienten zu dem zu bestimmenden Zustandsvektor $\overline{X}$ zusammengefasst werden. Alternativ können die Werte der Temperatur an diskreten Stützstellen, welche zur numerischen Lösung (Quadratur) der den Strahlungstransfer beschreibenden Integrale benutzt werden, zum Lösungsvektor zusammengefasst werden:

$$\vec{X} \;=\; \left( T(z_1), T(z_2), \ldots, T(z_N) \right) \;. \qquad\qquad (2)$$

Gleichermaßen wird eine Diskretisierung für Druck $p(z)$ und Gaskonzentrationen $\rho_m(z)$ usw. durchgeführt. Die Verallgemeinerung auf zwei- bzw. dreidimensionale Ortsabhängigkeit erfolgt analog. Ebenso wird der allgemeine Fall mehrerer Zustandsgrößen, z.B. Temperatur- und Wasserdampf-Profil, durch Konkatenierung der Vektoren der einzelnen diskretisierten Profile behandelt. Im Folgenden soll zur Vereinfachung nur von *einer* Zustandsgröße $\overline{X}$ gesprochen werden.

Im Allgemeinen hängt das Spektrum in nichtlinearer Weise von den gesuchten Gas-Variablen Druck, Temperatur und Konzentration(en) ab, so dass deren Bestimmung mit Hilfe iterativer Verfahren - "nonlinear least squares" - erfolgt. Ausgehend von einer ursprünglichen Schätzung ("initial guess") der Lösung (im Falle der Atmosphären-Fernerkundung beispielsweise klimatologische Mittelwerte) werden die gesuchten Variablen solange iteriert, bis das modellierte Spektrum (innerhalb des Rauschens) mit dem gemessenen Spektrum übereinstimmt.

$$\min_X \|\vec{Y} - \vec{f}(\vec{X})\|^2 = \min_X \sum_{i=1}^{M} \left( Y_i - f_i(\vec{X}) \right)^2 . \tag{3}$$

Entscheidendes Problem der Auswertung ist der Rechenaufwand für das Modellspektrum $f(\overline{X})$ in Gleichung (3). Sowohl für Absorptions- als auch Emissionsspektroskopie ist die zentrale Größe die Transmission, welche die Schwächung der Strahlungsintensität durch Extinktion (Absorption und Streuung) auf dem Wegstück $z_0 \rightarrow z$ durch das Medium beschreibt (Beer'sches Gesetz):

$$T(\nu; z_0, z) = \exp\left( -\int_{z_0}^{z} \sum_m \kappa_m(\nu, p(z'), T(z')) \, \rho_m(z') \, \mathrm{d}z' \right) . \tag{4}$$

Die Berücksichtigung instrumenteller Effekte bei der Berechnung des Modellspektrums erfolgt in technisch bekannter Weise durch Faltungen und wird hier nicht behandelt. Der Absorptionsquerschnitt $\kappa$ des $m$-ten Moleküls ergibt sich durch Summation über alle relevanten Spektrallinien, die durch die Linienposition $\hat{\nu}_l$ und Linienstärken $S_l$ charakterisiert sind:

$$\kappa_m(\nu, p(z), T(z)) = \sum_l S_l(T(z)) \, g(\nu; \hat{\nu}_l, \gamma_l(p(z), T(z))) . \tag{5}$$

Die Funktion $g$ wird durch Verbreiterungsmechanismen bestimmt. In gasförmigen Medien sind Druck- und Dopplerverbreiterung zu berücksichtigen, welche durch eine Lorentz- bzw. Gauß-Linienprofilfunktion ($g_L$ und $g_G$ mit Halbwertsbreiten $\gamma_L$ und $\gamma_G$) beschrieben werden. Die Kombination beider Effekte wird durch deren Faltung beschrieben, welche auf das Voigt-Profil führt:

$$\begin{aligned} g_V(\nu) &= g_L \otimes g_G \\ &= \int_{-\infty}^{\infty} \mathrm{d}\nu' \, \frac{\gamma_L/\pi}{(\nu - \nu')^2 + \gamma_L^2} \times \frac{\sqrt{\ln 2/\pi}}{\gamma_D} \cdot \exp\left[ -\ln 2 \left( \frac{\nu' - \hat{\nu}}{\gamma_D} \right)^2 \right] \end{aligned} \tag{6}$$

Zur Vereinfachung der Notation werden im Folgenden die Indizes $i$ für den Spektralgitterpunkt und $l$ für die $l$-te Spektrallinie weggelassen. Zudem werden die Superskripts "(L)" und "(D)" als Subskripts ohne Klammern geschrieben.
Bei der bisher angewandten Analyse spektroskopischer Messungen entsteht jedoch eine Vielzahl von Problemen und Nachteilen, auf die nachfolgend eingegangen wird.

• Die Zahl der zu berücksichtigenden Spektrallinien kann sehr groß werden. Die Temperatursondierung der Atmosphäre basiert auf der Auswertung spektraler Signaturen von Gasen mit bekannter, idealerweise konstanter Konzentration, also $CO_2$ im Infrarotbereich oder $O_2$ im Mikrowellenbereich. Infrarot-Sensoren auf operationellen meteorologischen Satelliten, wie z.B. MetOp, analysieren daher die $\nu_2$- und $\nu_3$-Banden von $CO_2$ im 15 $\mu$m- bzw. 4 $\mu$m-Bereich. In diesen beiden Spektralbereichen werden von der neuesten Version der GEISA-Datenbank jeweils ca. 25 000 Spektrallinien aufgelistet. Erschwerend kommt hinzu, dass bei der Modellierung eines Spektrums in einem Intervall [$\nu_{low}$, $\nu_{high}$] auch Beiträge von Linien außerhalb dieses Intervalls zu berücksichtigen sind, also alle Spektrallinien in einem Intervall [$\nu_{low} - \Delta\nu$, $\nu_{high} - \Delta\nu$] zu berechnen sind, wobei $\Delta\nu$ in der Größenordnung einiger cm$^{-1}$ liegt. (Für die Berechnung von $H_2O$-Absorptionsquerschnitten ist $\Delta\nu = 25$ cm$^{-1}$ üblich). Zudem sind neben dem interessierenden Gas auch die Beiträge aller anderen im betrachteten Spektralbereich interferierenden Moleküle zu berücksichtigen.

- Druck und Temperatur variieren in großem Bereich. Um die wiederholte Berechnung der Absorptionsquerschnitte $\kappa(\nu, p, T)$ zu vermeiden, liegt es nahe, diese im relevanten Druck- und Temperatur-Bereich und Spektralintervall an ausgewählten Stützstellen zu berechnen und in einer Datenbank abzuspeichern. Je nach Anwendung kann der zu erfassende Bereich jedoch sehr groß werden. Der Druck in der Atmosphäre nimmt von ca. $10^3$ mb am Boden bis zu etwa $10^{-4}$ mb in 100 km Höhe ab. Bei Verbrennungsprozessen werden Temperaturen von bis zu einigen tausend Grad erreicht. Mit zunehmender Größe der Datenbank wird allerdings der Zugriff auf die bei der Interpolation erforderlichen Werte langsamer. Zudem ist die optimale Interpolation der Absorptionsquerschnitte bezüglich Druck unklar. Im Falle druckverbreiterter Linien (Lorentzprofil) variiert $\kappa(\nu, p, T)$ linear mit dem Druck $p$ in den Linienflügeln ($\nu - \hat{\nu}_1 \gg \gamma_1$). Im Linienzentrum $\nu \approx \hat{\nu}_1$ gilt dagegen $\kappa(\nu, p, T) \sim 1/p$.

- Die Zahl der Spektralpunkte ist unter Umständen sehr groß. Für die Berechnung der Absorptionsquerschnitte $\kappa(\nu, p, T)$ wird in der Regel ein äquidistantes spektrales Stützstellengitter (Wellenzahlen $\nu_i - \nu_{i-1} = \delta\nu = $ const.) benutzt, wobei der Abstand der Gitterpunkte in Abhängigkeit von der (mittleren oder minimalen) (Voigt-)Halbwertsbreite der Spektrallinien gesetzt wird, also typisch

$$\delta\nu \approx \gamma_V/4 \quad \text{mit} \quad \gamma_V \approx \frac{1}{2}\left(\gamma_L + \sqrt{(\gamma_L^2 + 4\gamma_D^2)}\right) \quad . \tag{7}$$

Typische Linienbreiten druckverbreiterter Linien sind $\gamma_L(p) \approx (p/p_0)0{,}1$ cm$^{-1}$ mit $p_0 = 1013$ mb. In der Atmosphäre nimmt der Druck näherungsweise exponentiell mit der Höhe $z$ ab, und dementsprechend vermindert sich auch die Halbwertsbreite druckverbreiteter Linien bis zu einer Höhe, in welcher die Dopplerverbreiterung bedeutsam wird (mit einer Breite $\gamma_D$ proportional zur Linienposition sowie zur Wurzel aus Temperatur über molekulare Masse). Für ein Spektralintervall der Größe $\Delta\nu = 1$ cm$^{-1}$ im Mikrowellenbereich und eine Höhe $z = 100$ km mit Druck $p \approx 10^{-4}$ mb ergibt sich daher für die Zahl der Spektralpunkte eine Größenordnung $1/(0{,}1 \times 10^3/10^{-4}) = 10^6$. Im Infraroten werden in der Regel größere Spektralbereiche ausgewertet. Andererseits wird die Dopplerverbreiterung wegen der Proportionalität zur Linienposition bereits in niedrigeren Höhen relevant. Für ein Spektralintervall der Größe $\Delta\nu = 10$ cm$^{-1}$ im Infrarotbereich um 500 cm$^{-1}$ ($CO_2$ $\nu_2$-Bande) ergibt sich daher für die Zahl der Spektralpunkte eine Größenordnung von $10^5$.

- Die iterative Lösung des nichtlinearen "Least Squares"-Problems erfordert die wiederholte Berechnung des "Modellspektrums" durch Lösung der Strahlungstransportgleichungen. Insbesondere im Falle der Temperatur-Sondierung müssen dabei wegen ihrer Temperaturabhängigkeit die Absorptionsquerschnitte $\kappa$ in jedem Iterationsschritt neu berechnet werden.

- Es ist die Berechnung von Ableitungen $df(\overline{X})/d\overline{X}$ nach den gesuchten Parametern erforderlich. Die in den einzelnen Iterationsschritten erforderlichen Änderungen des Lösungsvektors $X$ werden im Wesentlichen durch die Ableitungen des Modell-Spektrums nach den gesuchten Parametern bestimmt. Im Falle der Temperatur-Sondierung muss dabei also auch die Temperatur-Ableitung des Absorptionsquerschnitts K berechnet werden.

- Eine geschlossen analytische Lösung des Faltungsintegrals des in Gleichung (6) angegebenen Voigt-Profils existiert nicht, so dass hier numerische Näherungsausdrücke verwendet werden müssen.

- Für qualitativ hochwertige Spektren (Signal-zu-Rausch Verhältnis, Auflösung), wie sie von den neuesten meteorologischen Sensoren (z.B. IASI auf MetOp) geliefert werden, ist eine Beschreibung der Spektrallinien durch ein Voigt-Profil oftmals nicht mehr ausreichend. So sind beispielsweise für die Berechnung der $CO_2$-Absorptionsquerschnitte Effekte der Linien-Mischung zu berücksichtigen. Ebenso konnte in Atmosphären-Spektren bereits eine sogenannte Stoß-Verengung (Dicke narrowing) beobachtet werden.

Die aus den genannten Gründen erheblichen Rechenzeiten für die Auswertung spektroskopischer Messungen durch Lösung des "Least Squares"-Problems von Gleichung (3) müssen insbesondere aufgrund der Komplexität des "Vorwärtsmodells" $f(\overline{X})$ als entscheidende Nachteile der spektroskopischen Fernmessungsverfahren gewertet werden, die einer weiten Verbreitung der Verfahren bisher hinderlich waren und ihren Einsatz weitgehend auf wissenschaftliche Anwendungsfelder beschränkt haben. Bekannte Ansätze zur Verringerung des Rechenaufwandes beruhen auf:

- teilweise signifikanten Vereinfachungen in der Berechnung des Vorwärtsmodells (Strahlungstransports). Wesentlicher Nachteil dabei ist, dass sich Näherungen im Vorwärtsmodell negativ auf das Konvergenzverhalten auswirken können, z.B. durch erhöhte Zahl von Iterationsschritten, Konvergenz in ein falsches Minimum oder geringe Qualität des Ergebnisses.

- Auswertung nur sehr kleiner Spektralbereiche und/oder reduzierter Auflösung. Nachteilig ist der damit verbundene Informationsverlust.

- Näherung des Voigt-Profils durch seine Grenzfälle Lorentz- bzw. Gauß-Profil für die Fälle dominierender Druck- bzw. Dopplerverbreiterung. Fallunterscheidungen ("if-branches") erschweren allerdings die Vektorisierbarkeit des Rechenprogramms. Im Übergangsbereich sind diese Näherungen naturgemäß nur eingeschränkt brauchbar.

Aus WO 2003/025552 A1 ist ein Laser-Spektroskopieverfahren bekannt, bei dem die Laserstrahlung durch ein Probenvolumen geleitet wird und durch Messung der Transmission durch das Probenvolumen die Absorption zumindest einer im Probenvolumen enthaltenen Zielsubstanz gemessen wird, wobei die Messung der Absorption in einer im Vergleich zu typischen Zeitdauern von signifikanten, störenden Effekten, wie z.B. Schwankungen der Laserintensität und elektronisches oder Versuchsrauschen, kurzen Zeitperiode ausgeführt wird, so dass diese störenden Effekte lediglich eine feststehende, konstante Dämpfung oder Verstärkung des Signals und eine feststehende, konstante Offset-Verschiebung verursachen.

Aus WO 1998/027416 A1 ist ein Verfahren zum Bestimmen einer Spurengaskonzentration in einer Gasprobe unter Verwendung der Fouriertransformations-IR-Spektroskopie bekannt.

In US 2006/0082778 A1 ist ein Verfahren beschrieben, mittels welchem sich ein gasförmiger Zielstoff, der in einem Gemisch mit wenigstens einer anderen gasförmigen Art als Bestandteil von geringer Menge vorhanden ist, unter Verwendung eines hohlraumvergrößerten optischen Spektrometers detektieren lässt.

In DE 10 2005 060 245 B3 werden zum Bestimmen von Konzentrations-, Druck- und Temperaturprofilen von Gasen in Verbrennungsprozessen und deren Abgasströmen und -wolken in einer Ausgleichsrechnung die für eine Berechnung von Modellspektren notwendigen Absorptionskoeffizienten für jede Wellenzahl als Funktion von Druck und Temperatur betrachtet. Hierzu werden diese Funktionen mittels interpolierender, zweidimensionaler, kubischer Splinefunktionen angenähert. In einer Druck-Temperatur-Ebene wird ein gewünschter Druck- und Temperatur-bereich in rechteckige Teilbereiche unterteilt, die achsenparallel sind, sich aber nicht überlappen. Für jedes Teilrechteck gilt ein zweidimensionales kubisches Polynom als interpolierende Funktion, deren Ableitungen nach Druck bzw. Temperatur sowie die gemischten Ableitungen nach Druck und Temperatur an den Ecken gleich sind.

SCHREIER ET AL: "The Voigt and complex error function: A comparison of computational methods" JOURNAL OF QUANTITATIVE SPECTROSCOPY AND RADIATIVE TRANSFER, ELSEVIER SCIENCE, OXFORD, GB, Bd. 48, Nr. 5-6, 1. November 1992(1192-11-01), Seiten 743-762, XP024425791 ISSN: 0022-4073 [gefunden am 1992-11-01], beschreibt mehrere Berechnungsverfahren für die Voigt-Funktion und für die komplexe Fehlerfunktion, die in Bezug auf Präzision und Laufzeit erläutert und verglichen werden. Eine Vektorisierung der Codes wird angewandt, wo dies möglich ist. Die Berechnungsgeschwindigkeit variierte über zwei Größenordnungen. Selbst ohne Vektorisierung kann die Restrukturierung des Quellcodes eine beträchtliche Beschleunigung bewirken. Die Rechenaufwand für die FourierTransformation wird geschätzt und mit anderen Verfahren verglichen. Für Anwendungen, bei denen das Verfahren der kleinsten Fehlerquadrate involviert ist, bietet die Auswertung der komplexen Fehlerfunktion eine effiziente Möglichkeit des Berechnens sowohl der Voigt-Funktion als auch von deren partiellen Ableitungen.

HUI A K ET AL: "Rapid computation of the Voigt and complex error functions" JOURNAL OF QUANTITATIVE SPECTROSCOPY AND RADIATIVE TRANSFER, ELSEVIER SCIENCE, OXFORD, GB, Bd. 19, Nr. 5, 1. Mai 1978 (1978-05-01), Seiten 509-519, XP024425065 ISSN: 0022-4073 [gefunden am 1978-05-01], schlägt ein einfaches und effizientes Verfahren für die Berechnung der komplexen Fehlerfunktion vor, und zwar einschließlich deren Realteils, bei dem es sich um das Voigt-Spektrum-Linien-Profil handelt. Dieses Verfahren basiert auf der Beobachtung von Harstad, dass eine rationale Approximation an die Fehlerfunktion, bei der es sich um den Wert der komplexen Fehlerfunktion auf der imaginären Achse handelt, sich beim Ersetzen von $y$ durch $y - ix$ außerhalb diese Achse analytisch fortsetzt. Der bei dieser Approximation auftretende Fehler kann durch Wahl eines optimalen Koeffizienten-Satzes gemäß den von Curtis und Osborne entwickelten Verfahren minimiert werden. Eine Analyse zeigt, dass die Ergebnisse für die meisten Anwendungen über die gesamte komplexe Ebene hinweg hinreichend präzise sind, wobei der Fehler jedoch zu der reellen Achse hin zunimmt. Es werden Vergleiche der Zeiten aufgeführt, die für verschiedene Verfahren an verschiedenen IBM-Computersystemen erforderlich sind und die diesen Rückschluss unterstützen.

HUMLICEK ET AL: "Optimized computation of the voigt and complex probability functions" JOURNAL OF QUANTITATIVE SPECTROSCOPY AND RADIATIVE TRANSFER, ELSEVIER SCIENCE, OXFORD, GB, Bd. 27, Nr. 4, 1. April 1982 (1982-04-01), Seiten 437-444, XP024722588 ISSN: 0022-4073 [gefunden am 1982-04-01], werden Verfahren zum Berechnen der komplexen Wahrscheinlichkeitsfunktion $w(z) = e^{-z^2} erfc(-iz)$ entwickelt, die auf die Voigt-Spektrum-Linien-Profile bezogen ist. Das Grundverfahren ist eine rationale Approximation, bei dem der Relativfehler des imaginären Teils auf der reellen Achse minimiert wird. Das Verfahren wird durch andere Verfahren ergänzt, um die Effizienz zu erhöhen und das unvermeidliche Fehlschlagen jeglicher rationaler Approximation nahe der reellen Achse zu verhindern. Das Verfahren ermöglicht das Auswerten sowohl echter als auch imaginärer Teile von $w(z)$ mit hoher relativer Präzision.

Aufgabe der vorliegenden Erfindung ist es, ein Verfahren und eine dieses Verfahren durchführende Hardware-Einrichtung zu schaffen, so dass - ohne die vorher genannten Probleme und Nachteile der bekannten Verfahren bzw. Hardware-Einrichtungen - aus einem oder mehreren, auch breitbandigen, Spektren mit hinreichend hoher Auflösung die Bestimmung der Zustandsgrößen, insbesondere Temperatur, eines gasförmigen Mediums oder eines anders gearteten Mediums mit einer im Allgemeinen hohen Anzahl verschiedener Molekülen ermöglicht wird und Analyseergebnisse in sehr kurzer Zeit nach der Messung zur Verfügung stehen.

Das durch die Erfindung geschaffene Verfahren und die Hardware-Einrichtung zu dessen Durchführung sollen sich somit so wohl für technische und industrielle Anwendungen, z.B. bei der Prozessüberwachung und -steuerung, als auch für die operationelle, zeitnahe ("near real time") Auswertung großer Datenmengen meteorologischer Fernerkundungssatelliten der neuesten Generation ohne signifikante Näherungen einsetzen lassen.

Zur Bewältigung und Ausräumung der vorher ausführlich diskutierten Probleme und Nachteile der derzeitigen Analyseverfahren spektroskopischer Messungen soll für die schnelle Auswertung gemessener Spektren und zur Ermittlung der Profile von Temperatur sowie Gaskonzentrationen und Druck durch die Erfindung insbesondere die rechenintensive Bestimmung der Modellspektren, vor allem der Absorptionsquerschnitte sowie der Ableitungen nach den gesuchten Größen, beschleunigt werden.

Diese Aufgabe wird bei einem Verfahren nach dem Oberbegriff des Patentanspruchs 1 durch die Merkmale in dessen kennzeichnendem Teil gelöst. Es handelt sich bei dem durch die Erfindung geschaffenen Verfahren um eine optimierte, effiziente und genaue Bestimmungsmethode für die Absorptionsquerschnitte der Gleichung (5), insbesondere der Voigtfunktion nach Gleichung (6), welche damit auf einfache mathematische Operationen wie Addition, Multiplikation und Division zurückgeführt wird.

Vorteilhafte Weiterbildungen und Ausgestaltungen des Verfahrens nach der vorliegenden Erfindung sind in den sich auf den Patentanspruch 1 unmittelbar oder mittelbar rückbeziehenden Unteransprüchen angegeben.

Eine Hardware-Einrichtung zur Durchführung des Verfahrens auf speziellen, optimierten Hardware-Bauteilen ist im Patentanspruch 6 angegeben. Demzufolge ist ein Coprozessor eines Host-PC-Rechners mit Hilfe eines oder mehrerer FPGA(Field Programmable Gate Array)-Bausteine und zusätzlicher Bausteine wie externer Speicher, Speicher-Interface, PC-Schnittstelle aufgebaut.

Da zudem die Berechnung der Summe über viele Spektrallinien nach Gleichung (5) einerseits und die Berechnung an einer

Vielzahl von spektralen Stützstellen andererseits unabhängig voneinander vorgenommen werden kann, wird eine weitere Beschleunigung durch die parallele Verarbeitung mit Hilfe einer Vielzahl optimierter Prozessoren erreicht.

Vorteilhafte Weiterbildungen und Ausgestaltungen der Hardware-Einrichtung nach der vorliegenden Erfindung sind in den sich auf den Patentanspruch 6 unmittelbar oder mittelbar rückbeziehenden Unteransprüchen angegeben.

Die Erfindung wird nachfolgend im Einzelnen erläutert, wobei die Beschreibung der zur Durchführung des Verfahrens geschaffenen Hardware-Einrichtung durch Zeichnungen gestützt sind. Es zeigen:

Fig.1    das Blockschaltbild einer mit einem Host-PC-Rechner zusammenarbeitenden Coprozessor-Einsteckkarte mit FPGA-Baustein,

Fig.2    das Blockschaltbild des im FPGA-Baustein enthaltenen Rechenwerks des Coprozessors von Fig.1,

Fig.3    das Blockschaltbild des Rechenwerks für die äußere Schleife (Koeffizienten Zähler-/Nennerpolynom),

Fig.4    das Blockschaltbild einer ersten Version des Rechen- werks für die innere Schleife, und

Fig.5    das Blockschaltbild einer zweiten Version des Rechen- werks für die innere Schleife.

Das erfindungsgemäß arbeitende Verfahren zur Berechnung des Absorptionsquerschnitts $\kappa_m(p,\,T)$ eines Moleküls nach Gleichung (5) wird nachfolgend für ein gegebenes Paar von Druck-und Temperatur-Werte $p,\,T$ und daran angepasste Spektrallinien-Parameter $\hat{\nu}_l,\,S_l(T),\,\gamma_l^{(L)}(p,\,T)$ und $\gamma_l^{(D)}(T)$ vorgestellt. Der zu optimierende Algorithmus kann durch den im Folgenden angegebenen Pseudocode (1) dargestellt werden. Die Verallgemeinerung auf die zusätzliche Berechnung der Ableitungen des Absorptionsquerschnitts erfolgt unter Verwendung üblicher Ableitungsregeln (Kettenregel, ...).

Pseudocode (1): Der zu optimierende Algorithmus für Gleichung (5). Inputs sind die Arrays der druck-und temperaturangepassten Linienparameter des Moleküls sowie das in der Regel äquidistante Wellenzahl-Stützstellengitter (nuGrid), das dabei den gesamten interessierenden Spektralbereich mit einem an die typische Linienbreite automatisch angepassten Stützstellenabstand umfasst, vgl. Gleichung (7). Output ist das Array der Absorptionsquerschnitte $\kappa_m \equiv$ XS.

```
DO l=1,numLines
   DO i=1,numFreq
      xs[i] = xs[i] + strength[l] * voigt(nuGrid[i], position[l], gammaL[l], gammaD[l])
   END DO
END DO
```

Ausgangspunkt der Erfindung ist ein optimiertes Verfahren zur Berechnung des in Gleichung (6) angegebenen Voigt-Profils $g_V$, welches für eine große Zahl von Spektrallinien und eine große Zahl von Wellenzahl-Gitterpunkten berechnet werden muss. Das Voigtprofil $g_V$ ist eine Funktion der Wellenzahl (bzw. Frequenz) $\nu_i$ (mit $i = 1,...,M$) und der Linienparameter Position $\hat{\nu}$, Druckverbreiterung $\gamma_L$ und Dopplerverbreiterung $\gamma_D$,

$$g_V(\nu; \hat{\nu}, \gamma_L, \gamma_D) = \frac{\sqrt{\ln 2/\pi}}{\gamma_D} K(x, y) \tag{8}$$

mit der Voigtfunktion

$$K(x, y) = \frac{y}{\pi} \int_{-\infty}^{\infty} \frac{e^{-t^2}}{(x-t)^2 + y^2} \, dt . \tag{9}$$

Die dimensionslosen variablen *x, y* sind definiert durch

$$x = \sqrt{\ln 2} \, \frac{\nu - \hat{\nu}}{\gamma_D} \quad \text{und} \quad y = \sqrt{\ln 2} \, \frac{\gamma_L}{\gamma_D} . \tag{10}$$

*x* und *y* sind nicht mit den Vektoren $\overline{X}$ und $\overline{Y}$ des "Least Squares"-Problems von Gleichung (3) zu verwechseln.

Die Voigtfunktion $K(x,y)$ bildet den Realteil der komplexen Fehlerfunktion $w(z)$ mit $z = x+iy$,

$$w(z) = K(x, y) + iL(x, y) = \frac{i}{\pi} \int_{-\infty}^{\infty} \frac{e^{-t^2}}{z - t} \, dt . \tag{11}$$

Effekte der Linien-Mischung können modelliert werden durch eine Verallgemeinerung von Gleichung (8) zu

$$g_{LM}(\nu; \hat{\nu}, \gamma_L, \gamma_D, \eta) = \frac{\sqrt{\ln 2/\pi}}{\gamma_D} (K(x, y) + \eta L(x, y)) . \tag{12}$$

Für die Modellierung stoßverengter Spektrallinien werden Galatry oder Rautian Profil-Funktionen verwendet, welche auf die komplexe Fehlerfunktion zurückgeführt werden können, z.B.

$$g_R(\nu; \hat{\nu}, \gamma_L, \gamma_D, \gamma_N) \;=\; \frac{\sqrt{\ln 2/\pi}}{\gamma_D}\, R(x, y, \zeta) \tag{13}$$

$$R(x, y, \zeta) \;=\; \Re\left(\frac{w(x + \mathrm{i}(y + \zeta))}{1 - \sqrt{\pi}\, w(x + \mathrm{i}(y + \zeta))}\right) \quad \text{mit} \quad \zeta \;=\; \sqrt{\ln 2}\,\frac{\gamma_N}{\gamma_D} \;.$$

Für die numerische Berechnung der Voigtfunktion $K$ und der komplexen Fehlerfunktion $w$ wurde in der Literatur bereits eine Vielzahl von Algorithmen vorgestellt, welche jedoch nahezu ausnahmslos für bestimmte Bereiche in der $x$, $y$ Ebene gültig sind (beispielsweise Reihenentwicklungen für kleine $x$, $y$). Zudem sind diese Verfahren in der Regel nicht für eine Hardware-Implementierung mit FPGA geeignet, da sie vielfach mit einer variablen, von $x$, $y$ abhängigen Anzahl von Entwicklungstermen oder Iterationsschleifen arbeiten.

In letzter Zeit haben sich vor allem Näherungsverfahren auf der Basis von rationalen Funktionen etabliert, welche sowohl hinsichtlich der erreichbaren Genauigkeit als auch bezüglich ihrer Effizienz (Geschwindigkeit und Speicherbedarf) vorteilhaft sind. Rationale Näherungen approximieren eine Funktion durch den Quotienten zweier Polynome, wobei die PolynomKoeffizienten funktionsspezifisch sind und durch Pade-Verfahren etc. ermittelt werden. Um zeitintensive Fallunterscheidungen ("if branches") zu vermeiden, ist eine rationale Näherung, welche den gesamten Definitionsbereich der Funktion ($-\infty < x < \infty$, $0 < y < \infty$) erfasst, wünschenswert. Für die komplexe Fehlerfunktion

$$w(z) \;=\; \frac{P(\bar{z})}{Q(\bar{z})} \;=\; \frac{\sum_{j=0}^{J} a_j \bar{z}^j}{\sum_{j=0}^{J+1} b_j \bar{z}^j} \quad \text{mit} \quad \bar{z} = y - \mathrm{i}x \tag{14}$$

kann nach dem Verfahren von Hui-Armstrong-Wray (1978) mit $J = 6$ eine Genauigkeit von mindestens 5 signifikanten Stellen für alle $x$, $y$ erreicht werden. Die Koeffizienten $a_j$ und $b_j$ sind reelle Konstanten mit $a_6 = 1/\sqrt{\pi}$ und $b_7 = 1$. Sensitivitätsstudien haben gezeigt, dass für Strahlungstransportrechnungen eine derartige Genauigkeit angepasst ist. Bei ungenaueren Algorithmen können beispielsweise Rundungsfehler bei der Berechnung der Differenzen in den Gleichungen (22), (23) auftreten. Wesentlich genauere Algorithmen sind wegen der endlichen Genauigkeit der Spektrallinienparameter nicht erforderlich.

Entsprechend Gleichung (14) wird die komplexe Fehlerfunktion durch den Quotienten zweier komplexer Polynome angenähert. Für eine einzelne Spektrallinie ist jedoch $y$ eine Konstante (Quotient Lorentzbreite/Gaußbreite), und bei der Berechnung des Voigt-Profils für die Wellenzahl-Stützstellen $\nu_i \sim x_i$ mit $i = 1,...,M$ wird daher erfindungsgemäß der Rechenaufwand reduziert, indem die komplexen Polynome $P(\bar{z})$, $Q(\bar{z})$ in $\bar{z}$ mit reellen Koeffizienten in Polynome in $x$ mit komplexen, von $y$ abhängigen Koeffizienten übergeführt werden:

$$\begin{aligned}
P(\bar{z}) \;&=\; \sum_{j=0}^{J} a_j\,(y - \mathrm{i}x)^j \\
&=\; \sum_{j=0}^{J} d_j(y)\, x^j \\
&=\; \sum_{j\,\text{even}} d_j' \, x^j \;+\; \mathrm{i}\sum_{j\,\text{odd}} d_j'' \, x^j \;=\; p_y'(x) + \mathrm{i}p_y''(x) \;,
\end{aligned} \tag{15}$$

wobei

$$d_k = (-\mathrm{i})^k \sum_{l=0}^{J-k} \binom{l+k}{k} a_{l+k} \, y^l \; . \tag{16}$$

Mit einer analogen Umformung für das Polynom $Q(\bar{z})$ im Nenner von Gleichung (14) ergibt sich

$$w(x+\mathrm{i}y) = \frac{p_y'(x) + \mathrm{i}p_y''(x)}{q_y'(x) + \mathrm{i}q_y''(x)} \; . \tag{17}$$

Da Rechenoperationen mit komplexen Zahlen aufwendiger sind als mit reellen Zahlen, wird Gleichung (14) durch weitere Umformungen schließlich übergeführt in rein reelle rationale Näherungen für den Real- und Imaginärteil

$$K(x,y) = \frac{r(x)}{t(x)} = \frac{\sum_{j=0}^{6} \rho_j(y) \, x^{2j}}{\sum_{j=0}^{7} \tau_j(y) \, x^{2j}} \tag{18}$$

$$L(x,y) = \frac{s(x)}{t(x)} = \frac{\sum_{j=0}^{6} \sigma_j(y) \, x^{2j+1}}{\sum_{j=0}^{7} \tau_j(y) \, x^{2j}} \; . \tag{19}$$

Hierbei sind die Koeffizienten $\rho_0,...,\tau_7$ ihrerseits Polynome in $y$ mit Koeffizienten, welche ausschließlich durch die Konstanten $a_0,..., b_7$ aus Gleichung (14) bestimmt sind,

$$\rho_0 = d_0 e_0 = a_0 b_0 + (a_0 b_1 + a_1 b_0)y + \ldots + (a_5 + a_6 b_6)y^{12} + a_6 y^{13} = \sum_{j=0}^{13} \phi_{0,j} y^j$$

$$\vdots$$

$$\rho_6 = d_5 + d_6 e_6 = a_6 y + (a_6 b_6 - a_5) = \sum_{j=0}^{1} \phi_{6,j} y^j$$

und

$$\tau_0 = e_0 e_0 = b_0^2 + 2b_0 b_1 y + (2b_0 b_2 + b_1^2)y^2 + \ldots + 2b_6 y^{13} + y^{14} = \sum_{j=0}^{14} \psi_{0,j} y^j$$

$$\vdots$$

$$\tau_6 = 2e_5 + e_6 e_6 = (b_6^2 - 2b_5) + 2b_6 y + 7y^2 = \sum_{j=0}^{2} \psi_{6,j} y^j$$

$$\tau_7 = 1 \; . \tag{20}$$

Für die rationale Näherung in Gleichung (14) mit $J = 6$ sind daher für jede Wellenzahl-Stützstelle anstatt 12 komplexer Multiplikationen und einer komplexen Division, äquivalent zu 54 reellen Multiplikationen und einer reellen Division, nur noch 22 reelle Multiplikationen und eine reelle Division erforderlich. Wird nur $K(x,y)$ allein benötigt, so erfordert dies nur 13 reelle Multiplikationen sowie eine reelle Division, und der Algorithmus kann in zwei arithmetischen Anweisungen implementiert werden.

Neben der Berechnung der Modellfunktion sind für die iterative Lösung des "Least Squares"-Problems von Gleichung (3) die Ableitungen der Modellfunktion nach dem Zustandsvektor erforderlich, im Falle der Temperatursondierung also auch Ableitungen des Absorptionsquerschnitts $\kappa$ nach der Temperatur und somit letztendlich wegen der Temperatur-Abhängigkeit $\gamma_L(p,T)$ und $\gamma_D(T)$ auch Ableitungen der Voigtfunktion nach $x$ und $y$. Die numerische Berechnung der Ableitungen durch finite Differenzen ist wegen verminderter Effizienz und Genauigkeit zu vermeiden. Gemäß der vorliegenden Erfindung werden daher vorteilhaft auch die Ableitungen der Voigtfunktion mit Hilfe der komplexen Fehlerfunktion berechnet. Aus der definierenden Differentialgleichung

$$w'(z) = \frac{2i}{\sqrt{\pi}} - 2z\,w(z) \qquad\qquad (21)$$

ergibt sich somit unmittelbar

$$\frac{\partial K(x,y)}{\partial x} = -2\Re\left(z \cdot w(z)\right) = -2\,(xK - yL) \qquad (22)$$

$$\frac{\partial K(x,y)}{\partial y} = +2\Im\left(z \cdot w(z)\right) - \frac{2}{\sqrt{\pi}} = 2\,(xL + yK) - \frac{2}{\sqrt{\pi}} \cdot \qquad (23)$$

Die Näherung von $K(x,y)$ (und $L(x,y)$) mit rationalen Funktionen hat die Berechnung des Absorptionsquerschnittes gemäß Gleichung (5) (sowie gegebenenfalls seiner Ableitungen) auf die Summe des Quotienten reeller Polynome zurückgeführt. Da Polynome in vorteilhafter Weise über ein Horner-Schema, z.B.

$$r(x) = (((((\rho_6 x^2 + \rho_5)x^2 + \rho_4)x^2 + \rho_3)x^2 + \rho_2)x^2 + \rho_1)x^2 + \rho_0 \qquad (24)$$

berechnet werden, erfordert dies also für jede Stützstelle $\nu_i \sim x_i$ und jede Linie ($y$) eine große Zahl von kombinierten Additionen/Multiplikationen sowie eine Division, also eine Vielzahl elementarer Gleitkommaoperationen ("Floating Point Operations").

Der optimierte Algorithmus wird durch den nachfolgend angegebenen Pseudocode (2) wiedergegeben, wobei es sich um einen Pseudo-Code des optimierten Algorithmus entsprechend den Gleichungen (5), (8), (18) für die Berechnung des Absorptionsquerschnitts auf einem äquidistanten Wellenzahl-Gitter im Bereich [$\nu_{start}$, $\nu_{stop}$] handelt. Die zusätzliche Berechnung des Imaginärteils $L(x,y)$ gemäß Gleichung (19) erfolgt in technisch nahe liegender Weise.

```
deltaFreq = (nuStop-nuStart) / (numFreq-1)
DO l=1,numLines
    y      = sqrt(ln(2)) * gammaL[l] / gammaD[l]
    xStart = sqrt(ln(2)) * (nuStart-position[l]) / gammaD[l]
    dx     = sqrt(ln(2)) * deltaFreq / gammaD[l]
    cVgt   = strength[l] * (sqrt(ln(2)/pi) / gammaD[l])
    rho0   = .....
    .... = .....
    tau6 = (psi[6,2]*y +psi[6,1])*y +psi[6,0]
    x = xStart
    DO i=1,numFreq
        xx = x*x
        nominator   = (((((rho6*xx+rho5)*xx+rho4)*xx+rho3)*xx+rho2)*xx+rho1)*xx+rho0
        denominator = ((((((xx+tau6)*xx+tau5)*xx+tau4)*xx+tau3)*xx+tau2)*xx+tau1)*xx+tau0
        xs[i] = xs[i] + cVgt * nominator/denominator
        x     = x+dx
    END DO
END DO
```

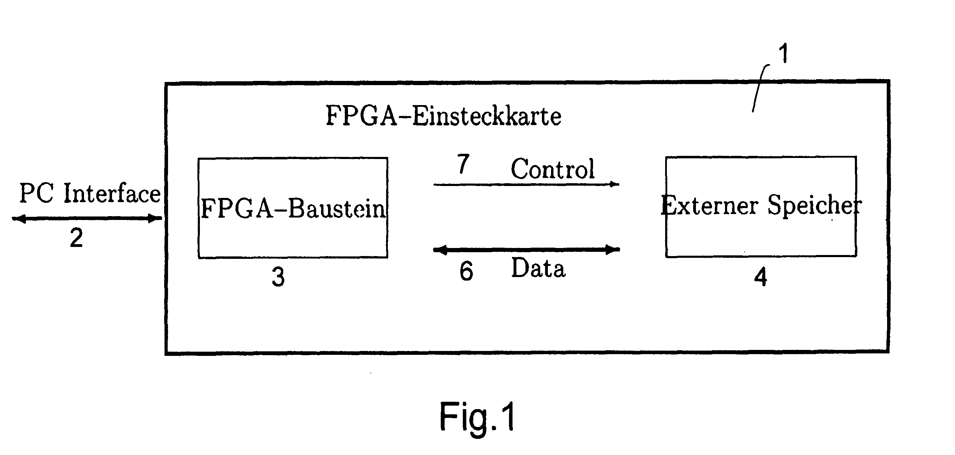

Im Folgenden wird anhand von Fig.1 bis Fig.5 die Hardware-Implementierung zur Durchführung des Verfahrens nach der vorliegenden Erfindung erläutert, wobei als Host-Rechner ein PC verwendet wird.

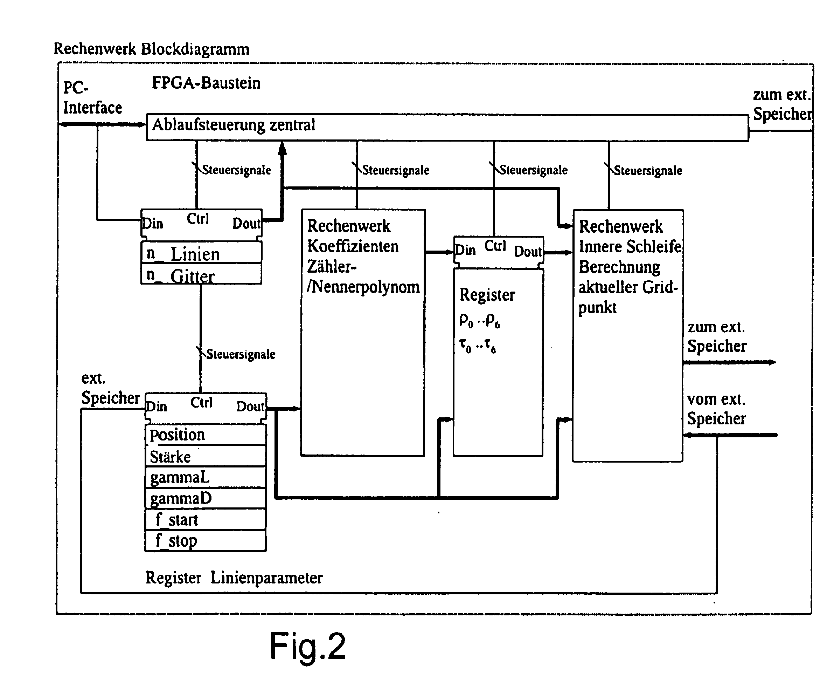

Zur Beschleunigung der Berechnungen werden die zeitkritischen Rechenoperationen in einen Coprozessor ausgelagert, der im Host-PC-Rechner auf einer PC-Einsteckkarte 1 realisiert ist, die eine PC-Schnittstelle (PC-Interface) 2, einen FPGA(Field Programmable Gate Array)-Baustein 3 und einen zusätzlichen externen Speicher 4 beinhaltet, der mit dem FPGA-Baustein 3 über einen Datenbus 5 und einen Control-Bus 6 verbunden ist, vgl. Fig.1 und Fig.2. Die Struktur ist dem durchzuführenden Algorithmus angepasst. Jede Spektrallinie wird einzeln gerechnet und die Resultate für jeden Grid-Punkt werden im externen Speicher 4 der den FPGA-Baustein 3 enthaltenden PC-Einsteckkarte 1 gespeichert. Neu berechnete Summanden für einen Grid-Punkt werden jeweils auf den für den betreffenden Grid-Punkt bereits gespeicherten Summenwert gemäß Gleichung (5) aufaddiert.

Wie aus dem vorher angegebenen Pseudo-Code Pseudocode (2) ersichtlich ist, müssen zur Berechnung der Summe aller Spektrallinien zwei Schleifen durchlaufen werden. Die äußere Schleife über die Spektrallinien stellt dazu alle Werte zur Verfügung, die zur Abarbeitung der inneren Schleife über die Wellenzahl-Gitterpunkte benötigt werden.

Hierzu müssen die für eine Spektrallinie charakteristischen Werte aus dem externen Speicher geholt und in einem Register abgespeichert werden. Weiterhin müssen die Koeffizienten $\rho$ und $\tau$ (sowie gegebenenfalls $\sigma$) der Zähler- und Nennerpolynome berechnet werden. Diese Aktionen müssen für jeden Durchlauf der inneren Schleife nur einmal durchgeführt werden, weshalb das zuständige Rechenwerk als serielles Rechenwerk ausgeführt wird. Die innere Schleife ist maximal zeitkritisch, weshalb dieses Rechenwerk zweckmäßig als vollparallele Pipeline ausgeführt wird.

Die Aktivitäten des seriellen Rechenwerks für die äußere Schleife können während der Abarbeitung der inneren Schleife stattfinden und damit bereits die Werte für den nächsten Durchlauf durch die innere Schleife bereitstellen. Alle Operationen werden von einer zentralen Ablaufsteuerung gesteuert, die auch für die Kommunikation zum Host-PC-Rechner und zum externen Speicher zuständig ist.

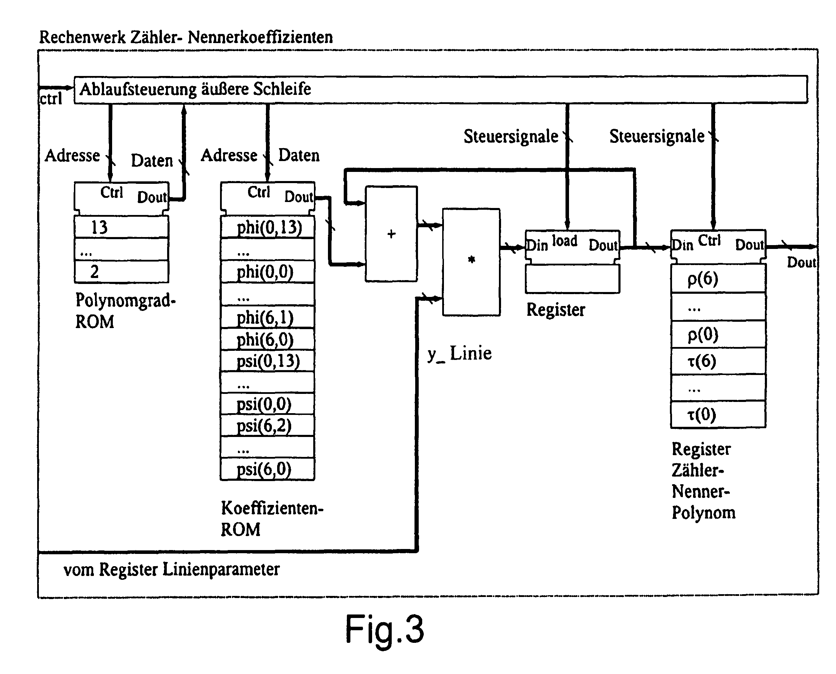

Das in Fig.3 dargestellte Rechenwerk für die äußere Schleife hat eine eigene Ablaufsteuerung und kommuniziert mit der zentralen Ablaufsteuerung. Je nach Anforderung können die Addierer und Multiplizierer Festkomma("Fixed-Point")- oder Gleitkomma("Floating-Point")-Einheiten darstellen. Die dargestellten Datenleitungen stellen Busse der benötigten Wortbreite dar. Die Koeffizienten $\phi_{i,j}$ und $\psi_{i,j}$ in Gleichung (20) für die Berechnung der Polynome $\rho_j(y)$ und $\tau_j(y)$, Gleichung (18), sind konstant und werden in der benötigten Wortbreite und dem entsprechenden Format fest im FPGA-Baustein abgespeichert, ebenso die Polynomgrade für jedes zu berechnende Polynom.

Die lokale Ablaufsteuerung erzeugt die Steuersignale zur Steuerung der seriellen Addition und Multiplikation sowie die Adressen für das Koeffizienten ROM und das Polynomgrad ROM. Die dargestellte serielle Architektur realisiert das Horner-Schema. Das Ergebnis einer jeden Berechnung wird in einem Register abgespeichert (Register Zähler-/Nennerpolynom), auf welches das Rechenwerk für die Berechnung der inneren Schleife Zugriff hat.

Die Berechnung der Polynomkoeffizienten geschieht mit Hilfe von geeignet verschalteten Multiplizierer/Addierer-Stufen. Diese Stufen können aus einzelnen Gattern und Flip-Flops (FPGA-Ressourcen) aufgebaut werden. Es können aber auch vorgefertigte Funktionsblöcke (DSP-Blöcke, Multiplizierer-Blöcke, MAC-Blöcke) verwendet werden. Die Verwendung von herstellerspezifischen oder anderweitig bezogenen IP-Blöcken ist ebenfalls möglich.

Die Berechnung der Polynomkoeffizienten kann seriell erfolgen, wobei jeweils nur eine Multiplizierer/Addierer-Stufe zum Einsatz kommt. Der gesamte Koeffizient wird durch sequentielle Zwischenspeicherung und Summation in einem Register realisiert.

Das Rechenwerk für die innere Schleife erfüllt die folgenden Aufgaben:

- Erzeugung von $x^2$ aus dem geeignet umgerechneten Wellenzahl-Startwert und dem ebenso umgerechneten Wert für das Wellenzahl-Inkrement mit Hilfe einer Addierer-Register-(Akkumulator)-Struktur;

- Berechnung von Zähler- und Nennerpolynom aus $x^2$ und den im Koeffizientenrechenwerk (äußere Schleife) berechneten Zähler- und Nennerkoeffizienten;

- Bildung des Quotienten;

- Aufaddieren und Abspeichern im externen Speicher.

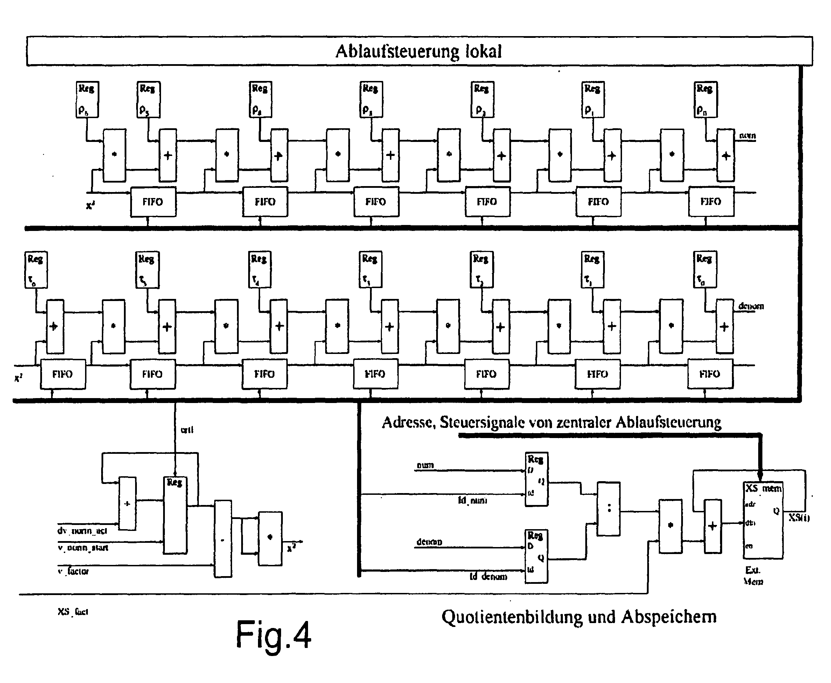

Das in einer ersten Version in Fig.4 dargestellte Rechenwerk für die innere Schleife hat eine eigene Ablaufsteuerung und kommuniziert mit der zentralen Ablaufsteuerung. Alle Rechenwerke und gezeigten Datenleitungen können je nach Anwendung Fest- oder Gleitkommawerte geeigneter Wortlänge darstellen. Die gezeichnete Kettenstrukturen realisieren das Horner-Schema, wobei die Koeffizienten aus dem Koeffizientenregister zugeführt werden, dessen Inhalt im Rechenwerk der äußeren Schleife berechnet wird. Zähler und Nenner werden parallel in getrennten Multiplizierer/Addierer-Ketten gebildet.

Die verwendeten Rechenwerke werden in der Regel aus Gründen der besonderen Leistungsfähigkeit Pipeline-Rechenwerke sein, d.h. zwischen der Eingabe von Daten und der Ausgabe gültiger Daten liegt eine Pipeline-Latenzzeit von mehreren Takten. Diese Pipeline-Latenzzeit muss für den Operanden $x^2$ durch zwischengeschaltete FIFO-Speicher kompensiert werden, damit an jeder Stelle der Multiplizierer/Addierer-Kette die zusammengehörenden Operanden auftreten.

Die nachgeschaltete Dividierer/Multiplizierer/Addierer-Stufe ist ebenfalls als Pipeline aufgebaut. Alle Pipeline-Rechenwerke sind so aufgebaut, dass die Verarbeitungszeit jeweils die gleiche Anzahl von Taktzyklen umfasst. Die von Dividierer und Multiplizierer berechneten Werte werden auf den Wert aufaddiert, der sich in der für den betreffenden Grid-Punkt zuständigen externen Speicheradresse befindet. Hierzu muss der Wert aus dem externen Speicher gelesen werden, mit dem aktuellen Ergebnis addiert und wieder an der gleichen Adresse abgespeichert werden.

Die Multiplizierer/Addierer-Stufen können aus einzelnen Gattern und Flip-Flops (FPGA-Ressourcen) aufgebaut werden. Es können aber auch vorgefertigte Funktionsblöcke (DSP-Blöcke, Multiplizierer-Blöcke, MAC-Blöcke) verwendet werden. Die Verwendung von herstellerspezifischen oder anderweitig bezogenen IP-Blöcken ist ebenfalls möglich.

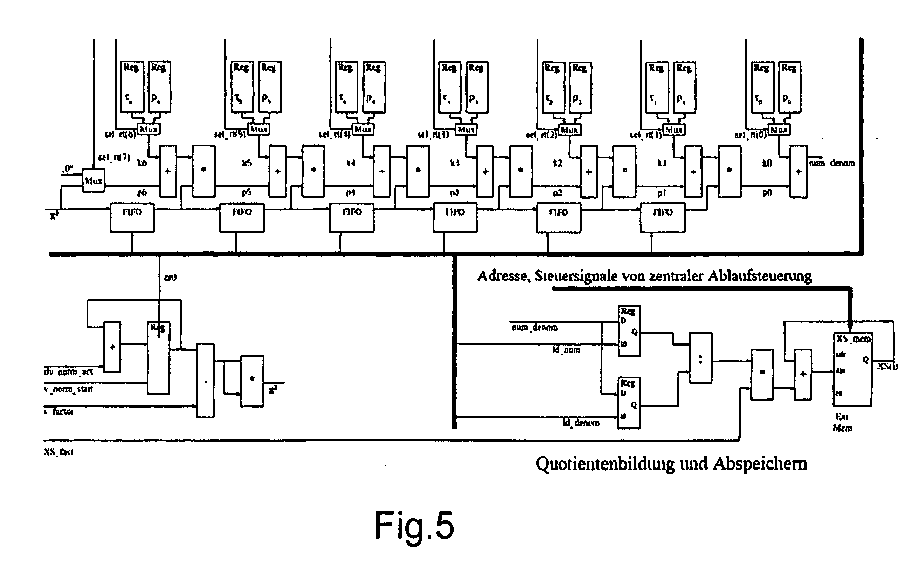

Zur Einsparung von Hardware kann das Rechenwerk für die innere Schleife entsprechend Fig.5 so aufgebaut werden, dass abwechselnd die für Zähler und Nenner gültigen Werte am Kettenanfang eingespeist werden. Hierfür müssen die Register für die Koeffizienten $\rho_i$ und $\tau_i$ über Multiplexer umgeschaltet werden. Die Steuersignale liefert die lokale Ablaufsteuerung. Die nach der entsprechend kumulierten Pipeline-Latenzzeit am Ausgang des Rechenwerkes vorliegenden Werte werden in je einem Zähler- bzw. Nennerregister zwischengespeichert, da sie nacheinander auftreten.

Wenn beide Register mit gültigen Werten geladen sind, kann die Division und die gleiche Nachberechnung wie in der vorher beschriebenen ersten Version des Rechenwerks für die innere Schleife vorgenommen werden. Die Division erfolgt zeitlich parallel mit der Neuberechnung eines Wertepaares in der Multiplizierer/Addierer-Kette. Die für die Verarbeitung nötige Anzahl von Taktzyklen verdoppelt sich.

Die Berechnung der Ausgangswerte (Summanden) erfolgt über ein Pipeline-Divisionswerk, einen Addierer und einen Multiplizierer. Für jeden Grid-Punkt existiert eine Speicheradresse im externen Speicher, aus dem der jeweils gespeicherte Wert gelesen, mit dem gerade berechneten Wert aufaddiert und wieder abgespeichert wird.

Die Zufuhr der Spektrallinienparameter kann komplett vor der Berechnung eines Spektrums erfolgen, oder aber auch während der Berechnung eines Spektrums in einer zeitlichen Abfolge, die der internen Abarbeitung entspricht. Die Spektrallinienparameter werden ganz oder teilweise im FPGA-internen Speicher oder alternativ im FPGA-externen Speicher abgespeichert. Die Spektrallinienparameter werden vor der Berechnung eines jeden Spektrums dem Coprozessor zugeführt. Die Zufuhr neuer Parameter kann während der Berechnung eines alten Spektrums erfolgen.

Die Übertragung der Daten von dem durch einen PC gebildeten Host-Rechner zum Coprozessor und zurück kann in vorteilhafter Weise über eine Standard-Schnittstelle, wie z.B. USB, RS232, PCI, PCI-Express, Ethernet, Hypertransport, Serial-ATA oder LVDS, erfolgen.

Die Auslegung der Hardware-Einrichtung kann vorteilhaft in VHDL, Verilog, SystemC oder anderen Hardware-Beschreibungssprachen erfolgen.

Die vorstehenden Ausführungen zur Realisierung der Hardware-Einrichtung betrafen die Hardware-Implementierung eines optimierten Voigtfunktion-Algorithmus für die Berechnung der Summe der Absorptionsquerschnitte nach Gleichung (5). Für die Berechnung der Ableitungen des Absorptionsquerschnitts und/oder von Rautian- und Galatry-

EP 2 093 547 B1

Profilen erfolgt in zweckmäßiger Weise eine Hardware-Implementierung durch entsprechende Erweiterungen.

Bezugszeichenliste

1   PC-Einsteckkarte
2   PC-Schnittstelle (PC-Interface)
3   FPGA(Field Programmable Gate Array)-Baustein
4   Externer Speicher
5   Datenbus
6   Control-Bus

**Patentansprüche**

**1.** Verfahren zum Bestimmen von Temperatur-, Druck- und Konzentrationsprofilen beliebiger, vorzugsweise gasförmiger Medien mit einer im Allgemeinen vorliegenden Vielzahl verschiedener Moleküle aus einem oder mehreren gemessenen Spektren mit Hilfe einer nichtlinearen Ausgleichsrechnung, bei der die gemessenen Spektren mit berechneten Modellspektren verglichen werden, welche Funktionen von Temperatur-, Druck- und Konzentrationsprofilen sind, die bei der Ausgleichsrechnung so lange variiert werden, bis die berechneten Modellspektren mit den gemessenen Spektren im Wesentlichen übereinstimmen, wobei sich der in der Transmissionsfunktion enthaltene, von der Wellenzahl $\nu$, vom höhenabhängigen Druck $p(z)$ und von der höhenabhängigen Temperatur $T(z)$ abhängige Absorptionsquerschnitt

$$\kappa_m(\nu, p(z), T(z)) \;=\; \sum_l S_l(T(z))\, g(\nu; \hat{\nu}_l, \gamma_l(p(z), T(z)))$$

des $m$-ten Moleküls durch Summation über alle relevanten, durch die Linienposition $\hat{\nu}_1$ und Linienstärken $S_1$ charakterisierten Spektrallinien unter Berechnung des sogenannten Voigt-Profils

$$g_V(\nu) \;=\; \int_{-\infty}^{\infty} d\nu' \; \frac{\gamma_L/\pi}{(\nu - \nu')^2 + \gamma_L^2} \;\times\; \frac{\sqrt{\ln 2/\pi}}{\gamma_D} \cdot \exp\left[-\ln 2 \left(\frac{\nu' - \hat{\nu}}{\gamma_D}\right)^2\right]$$

ergibt, das für eine große Anzahl von Spektrallinien und eine große Anzahl von Wellenzahl-Gitterpunkten berechnet wird und
eine Funktion der Wellenzahl $\nu_i$ ($i = 1,...,M$ Stützstellen) und der Linienparameter Position $\hat{\nu}$, Druckverbreiterung $\gamma_L$

und Dopplerverbreiterung $\gamma_D$ entsprechend $g_V(\nu_i, \hat{\nu}, \gamma_L, \gamma_D) \;=\; \dfrac{\sqrt{\ln 2/\pi}}{\gamma_D}\, K(x, y)$ mit der Voigtfunktion $K(x, y) \;=\; \dfrac{y}{\pi} \displaystyle\int_{-\infty}^{\infty} \dfrac{e^{-t^2}}{(x - t)^2 + y^2}$ sowie mit $x \;=\; \sqrt{\ln 2}\,\dfrac{\nu - \hat{\nu}}{\gamma_D}$ und $y \;=\; \sqrt{\ln 2}\,\dfrac{\gamma_L}{\gamma_D}$

ist, wobei die Voigtfunktion $K(x,y)$ den Realteil der komplexen Fehlerfunktion

$$w(z) \;=\; K(x, y) + iL(x, y) \;=\; \frac{i}{\pi} \int_{-\infty}^{\infty} \frac{e^{-t^2}}{z - t}\, dt$$ mit $z = x+iy$ bildet, die durch die komplexe Fehler-

**14**

funktion $w(z) = \dfrac{P(\bar{z})}{Q(\bar{z})} = \dfrac{\sum\limits_{j=0}^{J} a_j \bar{z}^{j}}{\sum\limits_{j=0}^{J+1} b_j \bar{z}^{j}}$ mit $\bar{z} = y - ix$ und $J = 6$ sowie den Koeffizienten $a_j$ und $b_j$ als reelle

Konstanten mit $a_6 = \dfrac{1}{\sqrt{\pi}}$ und $b_7 = 1$ angenähert wird, wobei die komplexen Polynome $P(\bar{z})$, $Q(\bar{z})$ in $\bar{z}$ mit

reellen Koeffizienten in Polynome in $x$ mit komplexen, von $y$ abhängigen Koeffizienten entsprechend

$$P(\bar{z}) = \sum_{j=0}^{J} a_j (y - ix)^j$$

$$= \sum_{j=0}^{J} d_j(y)x^j$$

$$= \sum_{j\ \mathrm{even}} d'_j x^j + i \sum_{j\ \mathrm{odd}} d''_j x^j = p'_y(x) + i p''_y(x),$$

übergeführt werden, **dadurch gekennzeichnet dass**

$$d_k = (-i)^k \sum_{l=0}^{J-k} \binom{l+k}{k} a_{l+k} y^l,$$

und das Polynom $Q(\bar{z})$ analog übergeführt wird, so dass sich als Fehlerfunktion

$w(x + iy) = \dfrac{p'_y(x) + i p''_y(x)}{q'_y(x) + i q''_y(x)}$ ergibt, dass die komplexe Fehlerfunktion schließlich in rein reelle rationale Näherungen für den Real- und Imaginärteil entsprechend

$$K(x,y) = \frac{r(x)}{t(x)} = \frac{\sum\limits_{j=0}^{6} \rho_j(y)x^{2j}}{\sum\limits_{j=0}^{7} \tau_j(y)x^{2j}}$$

$$L(x,y) = \frac{s(x)}{t(x)} = \frac{\sum\limits_{j=0}^{6} \sigma_j(y)x^{2j+1}}{\sum\limits_{j=0}^{7} \tau_j(y)x^{2j}}$$

übergeführt wird, wobei die Koeffizienten $\rho_0, \ldots, \tau_7$ ihrerseits Polynome in $y$ mit Koeffizienten sind, welche in folgender Weise ausschließlich durch die Konstanten $a_0, \ldots, b_7$ aus der komplexen Fehlerfunktion bestimmt sind:

$$\rho_0 = d_0 e_0 \ = \ a_0 b_0 \ + \ (a_0 b_1 + a_1 b_0) y \ + \ \ldots \ + \ (a_5 + a_6 b_6) y^{12} \ + \ a_6 y^{13} \ = \ \sum_{j=0}^{13} \phi_{0,j} y^j$$

$$\vdots$$

$$\rho_6 = d_5 + d_6 e_6 \ = \ a_6 y + (a_6 b_6 - a_5) \ = \ \sum_{j=0}^{1} \phi_{6,j} y^j$$

und

$$\tau_0 = e_0 e_0 \ = \ b_0^2 \ + \ 2 b_0 b_1 y \ + \ (2 b_0 b_2 + b_1^2) y^2 \ + \ \ldots \ + \ 2 b_6 y^{13} \ + \ y^{14} \ = \ \sum_{j=0}^{14} \psi_{0,j} y^j$$

$$\vdots$$

$$\tau_6 = 2 e_5 + e_6 e_6 \ = \ (b_6^2 - 2 b_5) + 2 b_6 y + 7 y^2 \ = \ \sum_{j=0}^{2} \psi_{6,j} y^j$$

$$\tau_7 = 1 \quad .$$

wobei das Verfahren auf einer Hardware-Einrichtung ausgeführt wird.

2. Verfahren nach Anspruch 1, **dadurch gekennzeichnet, dass** neben der Berechnung des Modell-Spektrums für die iterative Lösung der Ausgleichsrechnung die Ableitungen des Modell-Spektrums nach dem Zustandsvektor bestimmt werden, im Falle der Temperatursondierung also auch die Ableitungen des Absorptionsquerschnitts $\kappa$ nach der Temperatur und somit letztendlich wegen der Temperatur-Abhängigkeit $\gamma_L(p, T)$ und $\gamma_D(p, T)$ auch Ableitungen der Voigtfunktion nach $x$ und $y$.

3. Verfahren nach Anspruch 1 und 2, **dadurch gekennzeichnet, dass** die Ableitungen der Voigtfunktion mit Hilfe der komplexen Fehlerfunktion berechnet werden, wobei sich aus der definierenden Differentialgleichung

$$w'(z) \ = \ \frac{2i}{\sqrt{\pi}} \ - \ 2 z w(z)$$ somit unmittelbar

$$\frac{\partial K(x, y)}{\partial x} \ = \ -2\Re(z \cdot w(z)) \qquad = \ -2(z K \ - \ y L)$$

$$\frac{\partial K(x, y)}{\partial y} \ = \ +2\Im(z \cdot w(z)) \ - \ \frac{2}{\sqrt{\pi}} \ = \ 2(x L + y K) \ - \ \frac{2}{\sqrt{\pi}}$$

ergibt.

4. Verfahren nach einem der vorhergehenden Ansprüche, **dadurch gekennzeichnet, dass** die Näherung von $K(x, y)$ (und $L(x,y)$ mit rationalen Funktionen die Berechnung des Absorptionsquerschnittes sowie gegebenenfalls seiner Ableitungen auf die Summe des Quotienten reeller Polynome zurückführt, so dass die Polynome über ein Horner-Schema, z.B.

$$r(x) \; = \; (((((\rho_6 x^2 + \rho_5)\, x^2 + \rho_4)\, x^2 + \rho_3)\, x^2 + \rho_2)\, x^2 + \rho_1)\, x^2 + \rho_0$$

berechenbar sind und dies für jede Stützstelle $v_i \sim x_i$ und jede Linie ($y$) eine Anzahl von kombinierten Additionen/ Multiplikationen sowie eine Division, also eine Vielzahl elementarer Fließkommaoperationen ("Floating Point Operations")erfordert.

5. Verfahren nach einem der vorhergehenden Ansprüche, **gekennzeichnet durch** eine parallele Verarbeitung mit Hilfe einer Vielzahl von optimierten Prozessoren.

6. Hardware-Einrichtung die ein Verfahren nach einem der vorhergehenden Ansprüche, durch führt wobei, zur Durchführung von nicht zeitkritischen Rechenoperationen als Host-Rechner ein PC mit seinem Prozessor vorgesehen ist, im PC darüber hinaus zur Beschleunigung der Berechnungen ein Coprozessor vorgesehen ist, in welchen zeitkritische Rechenoperationen ausgelagert werden, der Coprozessor auf einer PC-Einsteckkarte (1) realisiert ist, die eine als Standardschnittstelle wie USB, RS232, PCI, PCI-Express, Ethernet, Hypertransport, Serial-ATA oder LVDS realisierbare PC-Schnittstelle (2), einen ein Rechenwerk enthaltenden FPGA(Field Programmable Gate Array)-Baustein (3) und einen zusätzlichen externen Speicher (4) umfasst, die Struktur des Coprozessors dem durchzuführenden, jede Spektrallinie einzeln berechnenden Algorithmus entsprechend den im Anspruch 1 angegebenen Gleichungen

$$\kappa_m(\nu, p(z), T(z)) \; = \; \sum_l S_l\big(T(z)\big)\, g\big(\nu; \dot{\nu}_l, \gamma_l(p(z), T(z))\big)\,,$$

$$g_V(\nu;\, \dot{\nu}, \gamma_L, \gamma_D) \; = \; \frac{\sqrt{\ln 2/\pi}}{\gamma_D}\, K(x, y)$$

und

$$K(x, y) \quad = \; \frac{r(x)}{t(x)} \; = \; \frac{\sum\limits_{j=0}^{6} \rho_j(y) x^{2j}}{\sum\limits_{j=0}^{7} \tau_j(y) x^{2j}}$$

angepasst ist, die Resultate für jeden Grid-Punkt im externen Speicher der PC-Einsteckkarte gespeichert werden und neu berechnete Summanden für einen Grid-Punkt jeweils auf den für den betreffenden Grid-Punkt bereits gespeicherten Summen-Wert aufaddiert werden.

7. Hardware-Einrichtung nach Anspruch 6, **dadurch gekennzeichnet, dass** in dem das Rechenwerk enthaltenden FPGA-Baustein (3) zur Berechnung der Summe aller Spektrallinien zwei Schleifen durchlaufen werden, dass die äußere Schleife über die Spektrallinien dazu alle Werte zur Verfügung stellt, die zur Abarbeitung der inneren Schleife über die Wellenzahl-Gitterpunkte benötigt werden, dass hierzu die für eine Spektrallinie charakteristischen Werte aus dem externen Speicher geholt und in einem Register abgespeichert werden, dass weiterhin die Koeffizienten $\rho$ und $\tau$ sowie gegebenenfalls $\sigma$ der Zähler- und Nennerpolynome berechnet werden, dass diese Aktionen für jeden Durchlauf der inneren Schleife nur einmal durchgeführt werden, weshalb das zuständige Rechenwerk als serielles Rechenwerk ausgeführt ist, dass die innere Schleife maximal zeitkritisch ist, weshalb dieses Rechenwerk als vollparallele Pipeline ausgeführt ist, dass die Aktivitäten des seriellen Rechenwerks für die äußere Schleife während der Abarbeitung der inneren Schleife stattfinden können und damit bereits die Werte für den nächsten Durchlauf durch die innere Schleife bereitstellen und dass alle Operationen von einer zentralen Ablaufsteuerung gesteuert sind, die auch für die Kommunikation zum Host-PC-Rechner und zum externen Speicher (4) zuständig ist.

8. Hardware-Einrichtung nach Anspruch 6 und 7, **dadurch gekennzeichnet, dass** das Rechenwerk für die äußere Schleife eine eigene Ablaufsteuerung aufweist und mit der zentralen Ablaufsteuerung kommuniziert, dass je nach Anforderung die vorgesehenen Addierer und Multiplizierer Festkomma("Fixed-Point")- oder Gleitkomma("Floating-Point")-Einheiten darstellen können, dass die vorgesehenen Datenleitungen Busse der benötigten Wortbreite darstellen, dass die Koeffizienten $\phi_{i,j}$ und $\psi_{i,j}$ für die Berechnung der Polynome $\rho_j(y)$ und $\tau_j(y)$ konstant sind und in der benötigten Wortbreite und dem entsprechenden Format ebenso wie die Polynomgrade für jedes zu berechnende Polynom fest im FPGA-Baustein (3) abgespeichert werden, dass die lokale Ablaufsteuerung die Steuersignale zur Steuerung der seriellen Addition und Multiplikation sowie die Adressen für das Koeffizienten-ROM und das Polynomgrad-ROM erzeugt, dass die dargestellte serielle Architektur das Horner-Schema realisiert und dass das Ergebnis einer jeden Berechnung in einem Register (Register Zähler-/Nennerpolynom) abgespeichert wird, auf welches das Rechenwerk für die Berechnung der inneren Schleife Zugriff hat.

9.  Hardware-Einrichtung nach Anspruch 8, **dadurch gekennzeichnet, dass** zur Berechnung der Polynomkoeffizienten im Rechenwerk geeignet verschaltete Multiplizierer/Addierer-Stufen vorgesehen sind, dass diese Stufen entweder aus einzelnen Gattern und Flip-Flops in Form von FPGA-Ressourcen aufgebaut sind oder aber als vorgefertigte Funktionsblöcke in Form von DSP-Blöcken, Multiplizierer-Blöcken oder MAC-Blöcken oder als herstellerspezifische oder anderweitig bezogene IP-Blöcke ausgebildet sind und dass die Berechnung der Polynomkoeffizienten in den Multiplizierer/Addierer-Stufen seriell erfolgt, wobei jeweils nur eine Multiplizierer/Addierer-Stufe zum Einsatz kommt, und dass der gesamte Koeffizient durch sequentielle Zwischenspeicherung und Summation in einem Register realisiert wird.

10. Hardware-Einrichtung nach Anspruch 7, **dadurch gekennzeichnet, dass** das Rechenwerk für die innere Schleife zur Erfüllung folgender Funktionen vorgesehen ist:

    • Erzeugung von $x^2$ aus einem geeignet umgerechneten Wellenzahl-Startwert und einem ebenso umgerechneten Wert für das Wellenzahl-Inkrement mit Hilfe einer Addierer-Register-(Akkumulator)-Struktur;
    • Berechnung von Zähler- und Nennerpolynom aus $x^2$ und den im Koeffizientenrechenwerk (äußere Schleife) berechneten Zähler- und Nennerkoeffizienten;
    • Bildung des Quotienten;
    • Aufaddieren und Abspeichern im externen Speicher (4).

11. Hardware-Einrichtung nach Anspruch 10, **dadurch gekennzeichnet, dass** das Rechenwerk für die innere Schleife eine eigene Ablaufsteuerung aufweist und mit der zentralen Ablaufsteuerung kommuniziert, dass alle Rechenwerke und vorgesehenen Datenleitungen je nach Anwendung Fest- oder Gleitkommawerte geeigneter Wortlänge darstellen können, dass die Kettenstrukturen das Horner-Schema realisieren, wobei die Koeffizienten aus dem Koeffizientenregister zugeführt werden, dessen Inhalt im Rechenwerk der äußeren Schleife berechnet wird, dass Zähler und Nenner parallel in getrennten Multiplizierer/Addierer-Ketten gebildet werden, und dass den Multiplizierer/Addierer-Ketten eine Dividierer/Multiplizierer/Addierer-Stufe nachgeschaltet ist, wobei die vom Dividierer und Multiplizierer berechneten Werte auf den Wert aufaddiert werden, der sich in der für den betreffenden Grid-Punkt zuständigen externen Speicheradresse befindet, wozu der Wert aus dem externen Speicher gelesen wird, mit dem aktuellen Ergebnis addiert und wieder an der gleichen Adresse abgespeichert wird.

12. Hardware-Einrichtung nach Anspruch 10, **dadurch gekennzeichnet, dass** das Rechenwerk für die innere Schleife eine eigene Ablaufsteuerung aufweist und mit der zentralen Ablaufsteuerung kommuniziert, dass alle Rechenwerke und vorgesehenen Datenleitungen je nach Anwendung Fest- oder Gleitkommawerte geeigneter Wortlänge darstellen können, dass die Kettenstrukturen das Horner-Schema realisieren, wobei die Koeffizienten aus dem Koeffizientenregister zugeführt werden, dessen Inhalt im Rechenwerk der äußeren Schleife berechnet wird, dass Zähler und Nenner abwechselnd in einer Multiplizierer/Addierer-Kette gebildet werden, wozu die Register für die Koeffizienten $\rho_i$ und $\tau_i$ über Multiplexer umgeschaltet werden, dass am Ausgang des Rechenwerks je ein Zählerregister und ein Nennerregister zur Zwischenspeicherung der jeweils kumulierten Zähler- bzw. Nennerwerte vorgesehen ist, dass dem Zählerregister und dem Nennerregister eine Dividierer/Multiplizierer/Addierer-Stufe nachgeschaltet ist, wobei die Division im Dividierer dann erfolgt, wenn beide Register mit gültigen Werten geladen sind, und die von Dividierer und Multiplizierer berechneten Werte auf den Wert aufaddiert werden, der sich in der für den betreffenden Grid-Punkt zuständigen externen Speicheradresse befindet, wozu der Wert aus dem externen Speicher gelesen wird, mit dem aktuellen Ergebnis addiert und wieder an die gleiche Adresse abgespeichert wird, und dass die Division im Dividierer zeitlich parallel mit der Neuberechnung eines Wertepaares in der Multiplizierer/Addierer-Kette erfolgt.

13. Hardware-Einrichtung nach Anspruch 11 oder 12, **dadurch gekennzeichnet, dass** die verwendeten Rechenwerke Pipeline-Rechenwerke sind, d.h. zwischen der Eingabe von Daten und der Ausgabe gültiger Daten liegt eine Pipeline-Latenzzeit von mehreren Takten, die für den Operanden $x^2$ durch zwischengeschaltete FIFO-Speicher kompensiert wird, damit an jeder Stelle der Multiplizierer/Addierer-Ketten die zusammengehörenden Operanden auftreten, dass die nachgeschaltete Dividierer/Multiplizierer/Addierer-Stufe ebenfalls als Pipeline aufgebaut ist und dass alle Pipeline-Rechenwerke so aufgebaut sind, dass die Verarbeitungszeit jeweils die gleiche Anzahl von Taktzyklen umfasst.

14. Hardware-Einrichtung nach einem der Ansprüche 11 bis 13, **dadurch gekennzeichnet, dass** die einzelnen Multiplizierer/Addierer-Stufen der Multiplizierer/Addierer-Ketten entweder aus einzelnen Gattern und Flip-Flops in Form von FPGA-Ressourcen aufgebaut sind oder aber als vorgefertigte Funktionsblöcke in Form von DSP-Blöcken, Multiplizierer-Blöcken oder MAC-Blöcken oder als herstellerspezifische oder anderweitig bezogene IP-Blöcke ausgebildet sind und dass zur Berechnung der Ausgangswerte (Summanden) ein Pipeline-Divisionswerk, ein Addierer und ein Multiplizierer vorgesehen sind, wobei für jeden Grid-Punkt eine Speicheradresse im externen Speicher (4) existiert, aus dem der jeweils gespeicherte Wert gelesen, mit dem gerade berechneten aufaddiert und wieder abgespeichert wird.

15. Hardware-Einrichtung nach einem der Ansprüche 6 bis 14, **dadurch gekennzeichnet, dass** die komplett vor der Berechnung eines Spektrums oder alternativ während der Berechnung eines Spektrums in einer der internen Abarbeitung entsprechenden zeitlichen Abfolge dem Coprozessor-Rechenwerk zugeführten Spektrallinienparameter ganz oder teilweise im FPGA-internen Speicher oder alternativ im FPGA-externen Speicher (4) abgespeichert werden.

**Claims**

1. A method for determining temperature, pressure and concentration profiles of optional, preferably gaseous media with a plurality of different molecules generally being present, from one or more measured spectra using non-linear adjustment computation wherein the measured spectra are compared to calculated model spectra that are functions of temperature, pressure and concentration profiles which are varied in the adjustment computation until the calculated model spectra substantially match with the measured spectra, wherein the absorption cross section of the m-th molecule, included in the transmission function and depending on the wave number v, the altitude-dependent pressure p(z) and the altitude-dependent temperature T(z),

$$\kappa_m(\nu, p(z), T(z)) \;=\; \sum_l S_l\big(T(z)\big)\, g\big(\nu; \hat{\nu}_l, \gamma_l(p(z), T(z))\big)$$

is obtained by summation over all relevant spectral lines **characterized by** the line position $\hat{\nu}_1$ and line strength $S_l$, calculating the so-called Voigt profile

$$g_V(\nu) \;=\; \int_{-\infty}^{\infty} d\nu' \; \frac{\gamma_L/\pi}{(\nu - \nu')^2 + \gamma_L^2} \;\times\; \frac{\sqrt{\ln 2/\pi}}{\gamma_D} \cdot \exp\left[ -\ln 2 \left( \frac{\nu' - \hat{\nu}}{\gamma_D} \right)^2 \right]$$

which is calculated for a great number of spectral lines and a great number of wave number grid points and which is a function of the wave number $\nu_i$ ($i = 1,...,M$ supporting points) and of the line parameters position $\hat{\nu}$, pressure broadening $\gamma_L$ and Doppler broadening $\gamma_D$ according to $g_V\big(\nu_i, \hat{\nu}, \gamma_L, \gamma_D\big) \;=\; \dfrac{\sqrt{\ln 2 / \pi}}{\gamma_D}\, K(x, y)$ with

the Voigt function $K(x, y) \;=\; \dfrac{y}{\pi} \int_{-\infty}^{\infty} \dfrac{e^{-t^2}}{(x - t)^2 + y^2}\, dt$ as well as with $x \;=\; \sqrt{\ln 2}\, \dfrac{\nu - \hat{\nu}}{\gamma_D}$ and

$$y = \sqrt{\ln 2} \, \frac{\gamma_L}{\gamma_D} \,,$$ wherein the Voigt function $K(x,y)$ forms the real portion of the complex error function

$$w(z) = K(x, y) + \mathrm{i}\,L(x, y) = \frac{\mathrm{i}}{\pi} \int_{-\infty}^{\infty} \frac{e^{-t^2}}{z - t} \, \mathrm{d}t$$ with $z = x + iy$ which is approximated by the complex

error function $$w(z) = \frac{P(\overline{z})}{Q(\overline{z})} = \frac{\sum_{j=0}^{J} a_j \overline{z}^{\,j}}{\sum_{j=0}^{J+1} b_j \overline{z}^{\,j}}$$ with $\overline{z} = y - ix$ and $J = 6$, as well as the coefficients $a_j$ and $b_j$ as

real constants with $a_6 = \dfrac{1}{\sqrt{\pi}}$ and $b_7 = 1$, the complex polynomials $P(\overline{z})$, $Q(\overline{z})$ in $\overline{z}$ with real coefficients being transformed into polynomials in $x$ with complex coefficients dependent on $y$ according to

$$P(\overline{z}) = \sum_{j=0}^{J} a_j (y - ix)^j$$

$$= \sum_{j=0}^{J} d_j(y) x_j$$

$$= \sum_{j\,even} d'_j x_j + i \sum_{j\,odd} d''_j x_j = p'_y(x) + i p''_y(x),$$

**characterized in**

**that** $d_k = (-\mathrm{i})^k \sum_{l=0}^{J-k} \binom{l + k}{k} a_{l+k} y^l \,,$

and the polynomial $Q(\overline{z})$ is transformed analogously, so that $w(x + \mathrm{i}y) = \dfrac{p'_y(x) + \mathrm{i}p''_y(x)}{q'_y(x) + \mathrm{i}q''_y(x)}$ is obtained

as an error function, that the complex error function is finally transformed into purely real rational approximations for the real and the imaginary portions according to

$$K(x, y) = \frac{r(x)}{t(x)} = \frac{\sum_{j=0}^{6} \rho_j(y) x^{2j}}{\sum_{j=0}^{7} \tau_j(y) x^{2j}}$$

$$L(x, y) = \frac{s(x)}{t(x)} = \frac{\sum_{j=0}^{6} \sigma_j(y) x^{2j+1}}{\sum_{j=0}^{7} \tau_j(y) x^{2j}}$$

wherein the coefficients $\rho_0,....,\tau_7$ themselves are polynomials in $y$ with coefficients which, in the manner indicated hereunder, are determined from the complex error function exclusively by the constants $a_0,...,b_7$:

$$\rho_0 = d_0 e_0 \;=\; a_0 b_0 \;+\; (a_0 b_1 + a_1 b_0)y \;+\; \ldots \;+\; (a_5 + a_6 b_6)y^{12} \;+\; a_6 y^{13} \;=\; \sum_{j=0}^{13} \phi_{0,j} y^j$$

$$\vdots$$

$$\rho_6 = d_5 + d_6 e_6 \;=\; a_6 y + (a_6 b_6 - a_5) \;=\; \sum_{j=0}^{1} \phi_{6,j} y^j$$

and

$$\tau_0 = e_0 e_0 \;=\; b_0^2 \;+\; 2b_0 b_1 y \;+\; (2b_0 b_2 + b_1^2)y^2 \;+\; \ldots \;+\; 2b_6 y^{13} \;+\; y^{14} \;=\; \sum_{j=0}^{14} \psi_{0,j} y^j$$

$$\vdots$$

$$\tau_6 = 2e_5 + e_6 e_6 \;=\; (b_6^2 - 2b_5) + 2b_6 y + 7y^2 \;=\; \sum_{j=0}^{2} \psi_{6,j} y^j$$

$$\tau_7 = 1 \quad .$$

wherein the method is executed on a hardware means.

2. The method of claim 1, **characterized in that**, besides the computation of the model spectrum, for the iterative solution of the adjustment computation, the derivatives of the model spectrum with respect to the state vector are determined, i.e. for a temperature sounding also the derivatives of the absorption cross section $\kappa$ with respect to temperature, and therefore, due to the temperature dependency $\gamma_L(p,T)$ and $\gamma_D(p,T)$, eventually also derivatives of the Voigt function with respect to $x$ and $y$ are determined.

3. The method of claims 1 and 2, **characterized in that** the derivatives of the Voigt function are calculated using the complex error function, wherein the defining differential equation $w'(z) = \dfrac{2i}{\sqrt{\pi}} - 2zw(z)$ thus immediately results in

$$\frac{\partial K(x,y)}{\partial x} = -2\Re(z \cdot w(z)) \qquad = -2(zK - yL)$$

$$\frac{\partial K(x,y)}{\partial y} = +2\Im(z \cdot w(z)) - \frac{2}{\sqrt{\pi}} = 2(xL + yK) - \frac{2}{\sqrt{\pi}}.$$

4. The method of one of the preceding claims, **characterized in that** the approximation of $K(x,y)$ and $L(x,y)$ with rational functions reduces the calculation of the absorption cross section, as well as its derivatives, if applicable, to the sum of the quotient of real polynomials so that the polynomials can be calculated using a Horner scheme, e.g.

$$r(x) = (((((\rho_6 x^2 + \rho_5)x^2 + \rho_4)x^2 + \rho_3)x^2 + \rho_2)x^2 + \rho_1)x^2 + \rho_0 \, ,$$

which requires -for each supporting point $v_i \sim x_i$ and each line ($y$) - a number of combined additions/multiplications, as well as a division, i.e. a plurality of elementary floating point operations.

5. The method of one of the preceding claims, **characterized by** a parallel processing using a plurality of optimized processors.

6. A hardware means for executing the method of one of the preceding claims, wherein a PC with a processor is provided as the host computer for performing computational operations not critical in terms of time, wherein the PC further comprises a co-processor for accelerating computation into which computational operations critical with respect to time are transferred, wherein the co-processor is realized on a PC plug-in card (1) comprising a PC interface (2) which can take the form of a standard interface such as USB, RS232, PCI, PCI-Express, Ethernet, Hyper Transport, Serial-ATA or LVDS, a FPGA (Field Programmable Gate Array)-component (3) compriseng an arithmetic unit, and an additional external memory (4), wherein the structure of the co-processor is adapted to the algorithm to be executed, said algorithm calculating each spectral line individually, in accordance with the equations given in claim 1

$$\kappa_m(\nu, p(z), T(z)) = \sum_l S_l(T(z))\, g(\nu; \hat{\nu}_l, \gamma_l(p(z), T(z)))$$

$$g_V(\nu; \hat{\nu}, \gamma_L, \gamma_D) = \frac{\sqrt{\ln 2/\pi}}{\gamma_D}\, K(x, y)$$

and

$$K(x, y) = \frac{r(x)}{t(x)} = \frac{\sum_{j=0}^{6} \rho_j(y)\, x^{2j}}{\sum_{j=0}^{7} \tau_j(y)\, x^{2j}}$$

wherein the results for each grid point are stored in the external memory of the PC plug-in card, and wherein newly calculated summands for a grid point are respectively added to the sum value already stored for the respective grid point.

7. The hardware means of claim 6, **characterized in that**, for the calculation of the sum of all spectral lines, two loops are run through in the FGPA component (3) comprising the arithmetic unit, that the outer loop across the spectral lines provides all values needed to execute the inner loop across the wave number grid points, that, for this purpose, the characteristic values of a spectral line are fetched from the external memory and are stored in a register, that, further, the coefficients $\rho$ and $\tau$ as well as $\sigma$, if applicable, of the numerator and denominator polynomials are calculated, that these actions are performed only once per sweep through the inner loop, which is why the relevant arithmetic unit is designed as a serial arithmetic unit, that the inner loop is maximally time-critical, which is why this arithmetic unit is designed as a fully parallel pipeline, that the activities of the serial arithmetic unit for the outer loop can be performed during the execution of the inner loop, thereby already providing the values for the next sweep through the inner loop, and that all operations are controlled by a central process control that is also charged with the communication to the host PC and to the external memory (4).

8. The hardware means of claims 6 and 7, **characterized in that** the arithmetic unit for the outer loop comprises a process control of its own and communicates with the central process control, that, depending on the requirements, the existing adders and multipliers can be fixed point units or floating point units, that the existing data lines are busses of the required word width, that the coefficients $\phi_{i,j}$ und $\psi_{i,j}$ for calculating the polynomials $\rho_j(y)$ and $\tau_j(y)$ are constant and, just as the polynomial degrees for each polynomial to be calculated, are permanently stored in the FPGA component (3) with the required word width and in the corresponding format, that the local process control generates the control signals for controlling the serial addition and multiplication and generates the addresses for the coefficient ROM and the polynomial degree ROM, that the serial architecture presented realizes the Horner scheme, and that the result of each calculation is stored in a register (register numerator/denominator polynomial) which can be accessed by the arithmetic unit for calculating the inner loop.

9. The hardware means of claim 8, **characterized in that**, for the computation of the polynomial coefficients, the arithmetic unit is provided with appropriately connected multiplier/adder stages, that these stages are either formed by individual gates and flip-flops in the form of FPGA resources or are designed as prefabricated functional blocks in the form of DSP blocks, multiplier blocks or MAC blocks or as IP blocks that are manufacturer-specific or obtained otherwise, and that the computation of the polynomial coefficients in the multiplier/adder blocks is serial, only one multiplier/adder stage being used at a time, and that the entire coefficient is realized by sequential intermediate storage and summation in a register.

10. The hardware means of claim 7, **characterized in that** the arithmetic unit for the inner loop is provided to fulfill the following functions:

   • generating $x^2$ from an appropriately converted wave number start value and a likewise converted value of the wave number increment using an adder-register-(accumulator) structure;
   • calculating the numerator and denominator polynomial from $x^2$ and the numerator and denominator coefficients calculated in the arithmetic unit for coefficients;
   • forming the quotient;
   • summing and storing in the external memory (4).

11. The hardware means of claim 10, **characterized in that** the arithmetic unit for the inner loop has a process control of its own and communicates with the central process control, that all arithmetic units and existing data lines can, depending on the application, represent fixed or floating point values of appropriate word length, that the chain structures realize the Horner scheme, the coefficients being supplied from the coefficient register whose content is calculated in the arithmetic unit of the outer loop, that the numerator and the denominator are formed in parallel in separate multiplier/adder chains, and that a divider/multiplier/adder stage is arranged downstream of the multiplier/ adder chains, the values calculated by the divider and the multiplier being added to the value present at the external memory address of the relevant grid point, for which purpose the value is read from the external memory, is added to the current result and is again stored at the same address.

12. The hardware means of claim 10, **characterized in that** the arithmetic unit for the inner loop has a process control of its own and communicates with the central process control, that all arithmetic units and existing data lines can, depending on the application, represent fixed or floating point values of appropriate word length, that the chain structures realize the Horner scheme, the coefficients being supplied from the coefficient register whose content is calculated in the arithmetic unit of the outer loop, that the numerator and the denominator are formed alternately in a multiplier/adder chain, for which purpose the registers for the coefficients $\rho_i$ and $\tau_i$ are switched via multiplexers, that the output of the arithmetic unit is provided with a numerator register and a denominator register, respectively, for buffering the respective cumulated numerator or denominator values, that a divider/multiplier/adder stage is arranged downstream of the numerator register and the denominator register, a division being performed in the divider if both registers are loaded with valid values, and values calculated by the divider and the multiplier are added to the value present at the external memory address of the relevant grid point, for which purpose the value is read from the external memory, is added to the current result and is again stored at the same address, and that the division in the divider is performed chronologically in parallel with the recalculation of a value pair in the multiplier/ adder chain.

13. The hardware means of claim 11 or 12, **characterized in that** the arithmetic units used are pipeline arithmetic units, i.e. a pipeline latency period of a plurality of clocks exists between the input of data and the output of valid data, which period is compensated for the operand $x^2$ by intermediate FIFO memories so that the operands belonging together appear at any position in the multiplier/adder chains, that the downstream divider/multiplier/adder stage is also designed as a pipeline, and that all pipeline arithmetic units are designed such that the processing time respectively comprises the same number of clock cycles.

**14.** The hardware means of one of claims 11 to 13, **characterized in that** the individual multiplier/adder stages of the multiplier/adder chains are either formed by individual gates and flip-flops in the form of FPGA resources or are designed as prefabricated functional blocks in the form of DSP blocks, multiplier blocks or MAC blocks or as IP blocks that are manufacturer-specific or obtained otherwise, and that a pipeline division unit, an adder and a multiplier are provided for the computation of the start values (summands), a memory address existing for each grid point in the external memory (4) from which the respective stored value is read, is added to the currently calculated value and is stored again.

**15.** The hardware means of one of claims 6 to 14, **characterized in that** the spectral line parameters supplied to the co-processor arithmetic unit either completely prior to the computation of a spectrum or alternatively during the computation of a spectrum in a chronological sequence corresponding to the internal execution are completely or partly stored in the memory internal to the FPGA or alternatively in the memory (4) external to the FPGA.

**Revendications**

**1.** Procédé de détermination de profils de température, de pression et de concentration de milieux quelconques, de préférence gazeux, généralement avec plusieurs molécules différents, à partir d'un ou de plusieurs spectres mesurés à l'aide d'un calcul d'ajustement non-linéaire, dans lequel calcul les spectres mesurés sont comparés à des spectres modèles calculés qui sont des fonctions de profils de température, de pression et de concentration, qui sont variés pendant le calcul d'ajustement jusqu'à ce que les spectres modèles calculés sont pour l'essentiel coïncidentes avec les spectres mesurés, la section efficace d'absorption de la m-ième molécule, contenue dans la fonction de transmission et dépendant du nombre d'onde v, de la pression relative à l'hauteur $p(z)$ et de la température relative à l'hauteur $T(z)$,

$$\kappa_m(\nu, p(z), T(z)) \ = \ \sum_l S_l(T(z)) \, g(\nu; \hat{\nu}_l, \gamma_l(p(z), T(z)))$$

étant obtenue par addition à travers toutes lignes spectrales importantes **caractérisées par** la position de ligne $\hat{\nu}_1$ et les intensités des lignes $S_l$ par calcul d'un profil de Voigt

$$\mathrm{gv}(\nu) \ = \ \int_{-\infty}^{\infty} d\nu' \ \frac{\gamma_L/\pi}{(\nu - \nu')^2 + \gamma_L^2} \ \times \ \frac{\sqrt{\ln 2/\pi}}{\gamma_D} \cdot \exp\left[ -\ln 2 \left( \frac{\nu' - \hat{\nu}}{\gamma_D} \right)^2 \right]$$

ledit profil étant calculé pour un grand nombre de lignes spectrales et un grand nombre de points de grille relatives à des nombres d'onde et étant une fonction du nombre d'onde $\nu_i$ ($i = 1,...,M$ points d'appui) et des paramètres de ligne position $\hat{\nu}$, élargissement par pression $\gamma_L$ et l'élargissement Doppler $\gamma_D$ suivant

$$g_V(\nu_i, \hat{\nu}, \gamma_L, \gamma_D) = \frac{\sqrt{\ln 2 / \pi}}{\gamma_D} K(x, y)$$ avec la fonction de Voigt

$$K(x, y) = \frac{y}{\pi} \int_{-\infty}^{\infty} \frac{e^{-t^2}}{(x - t)^2 + y^2} \, dt$$ et avec $x = \sqrt{\ln 2} \frac{\nu - \hat{\nu}}{\gamma_D}$ et $y = \sqrt{\ln 2} \frac{\gamma_L}{\gamma_D}$, la fonction de Voigt $K(x,y)$ formant la partie réale de la fonction d'erreur complexe

$$w(z) \ = \ K(x, y) + i L(x, y) = \frac{i}{\pi} \int_{-\infty}^{\infty} \frac{e^{-t^2}}{z - t} \, dt$$ avec $z=x+iy$, que l'on approxime par la fonction d'er-

reur complexe $w(z) = \dfrac{P(\overline{z})}{Q(\overline{z})} = \dfrac{\sum\limits_{j=0}^{J} a_j \overline{z}^{\,j}}{\sum\limits_{j=0}^{J+1} b_j \overline{z}^{\,j}}$ avec $\overline{z} = y - \mathrm{i}x$ et $J = 6$ et par les coefficients $a_j$ et $b_j$ comme

constantes réelles avec $a_6 = \dfrac{1}{\sqrt{\pi}}$ et $b_7 = 1$, les polynômes complexes $P(\overline{z})$, $Q(\overline{z})$ en $\overline{z}$ avec des coefficients réels sont transformés en polynômes en $x$ avec des coefficients complexes dépendant de $y$ selon

$$
\begin{aligned}
P(\overline{z}) &= \sum_{j=0}^{J} a_j (y - \mathrm{i}x)^j \\[2mm]
&= \sum_{j=0}^{J} d_j(y) x^j \\[2mm]
&= \sum_{j \text{ even}} d_j' x^j + \mathrm{i} \sum_{j \text{ odd}} d_j'' x^j = p_y'(x) + \mathrm{i} p_y''(x),
\end{aligned}
$$

**caractérisé en ce que**

$$
d_k = (-\mathrm{i})^k \sum_{l=0}^{J-k} \binom{l+k}{k} a_{l+k} y^l \,,
$$

et le polynôme $Q(\overline{z})$ est transformé de manière analogue, de sorte que l'on obtient comme fonction d'erreur

$w(x + \mathrm{i}y) = \dfrac{p_y'(x) + \mathrm{i}p_y''(x)}{q_y'(x) + \mathrm{i}q_y''(x)}$, **en ce que** ladite fonction d'erreur complexe est finalement transformée en des approximations rationaux purement réelles pour la partie réale et la partie imaginaire selon

$$
K(x,y) = \frac{r(x)}{t(x)} = \frac{\sum\limits_{j=0}^{6} \rho_j(y) x^{2j}}{\sum\limits_{j=0}^{7} \tau_j(y) x^{2j}}
$$

$$
L(x,y) = \frac{s(x)}{t(x)} = \frac{\sum\limits_{j=0}^{6} \sigma_j(y) x^{2j+1}}{\sum\limits_{j=0}^{7} \tau_j(y) x^{2j}}
$$

les coefficients c $\rho_0,....,\tau_7$ eux-mêmes étant des polynômes en $y$ avec coefficients qui, dans la manière indiquée en ce qui suit, sont déterminés exclusivement par les constantes $a_0,...,b_7$ à partir de ladite fonction d'erreur complexe:

$$\rho_0 = d_0 e_0 = a_0 b_0 + (a_0 b_1 + a_1 b_0)y + \ldots + (a_5 + a_6 b_6)y^{12} + a_6 y^{13} = \sum_{j=0}^{13} \phi_{0,j} y^j$$

$$\vdots$$

$$\rho_6 = d_5 + d_6 e_6 = a_6 y + (a_6 b_6 - a_5) = \sum_{j=0}^{1} \phi_{6,j} y^j$$

et

$$\tau_0 = e_0 e_0 = b_0^2 + 2 b_0 b_1 y + (2 b_0 b_2 + b_1^2)y^2 + \ldots + 2 b_6 y^{13} + y^{14} = \sum_{j=0}^{14} \psi_{0,j} y^j$$

$$\vdots$$

$$\tau_6 = 2 e_5 + e_6 e_6 = (b_6^2 - 2 b_5) + 2 b_6 y + 7 y^2 = \sum_{j=0}^{2} \psi_{6,j} y^j$$

$$\tau_7 = 1 \quad .$$

ledit procédé étant exécuté sur un dispositif matériel.

2. Procédé selon la revendication 1, **caractérisé en ce que**, à côté du calcul du spectre modèle, on détermine, pour la solution itérative du calcul d'ajustage, les dérivées du spectre modèle par rapport au vecteur d'état, en cas d'une sondage de température on détermine aussi les dérivées de la section efficace d'absorption $\kappa$ par rapport à la température et, par conséquent, à cause de la dépendance de la température $\gamma_L(p,T)$ et $\gamma_D(p,T)$ aussi les dérivées de la fonction de Voigt par rapport à $x$ et $y$.

3. Procédé selon les revendications 1 et 2, **caractérisé en ce que** les dérivées de la fonction de Voigt sont calculées à l'aide d'une fonction d'erreur complexe, l'équation différentielle définissante $w'(z) = \dfrac{2i}{\sqrt{\pi}} - 2zw(z)$ directement résultant en

$$\frac{\partial K(x, y)}{\partial x} = -2\Re(z \cdot w(z)) \qquad = -2(zK - yL)$$

$$\frac{\partial K(x, y)}{\partial y} = +2\Im(z \cdot w(z)) - \frac{2}{\sqrt{\pi}} = 2(xL + yK) - \frac{2}{\sqrt{\pi}} .$$

4. Procédé selon l'une des revendications précédentes, **caractérisé en ce que** l'approximation de $K(x,y)$ et $L(x,y)$ par des fonctions rationales réduit le calcul de la section efficace d'absorption et, le cas échéant, de ses dérivées à la somme des quotients de polynômes réelles, de sorte que les polynômes peuvent être calculés à l'aide d'un schéma de Horner, pour exemple:

$$r(x) = ((((((\rho_6 x^2 + \rho_5)x^2 + \rho_4)x^2 + \rho_3)x^2 + \rho_2)x^2 + \rho_1)x^2 + \rho_0$$

et ça nécessite un nombre d'additions/multiplications combinées et une division pour chaque point d'appui $\nu_i \sim x_i$ et chaque ligne ($y$), donc nécessitant une pluralité d'opérations de virgule flottante élémentaire ("Floating Point Operations").

5. Procédé selon l'une quelconque des revendications précédentes, **caractérisé par** un traitement en parallèle à l'aide d'une pluralité de processeurs optimalisés.

6. Dispositif matériel exécutant un procédé selon l'une des revendications précédentes, dans lequel un ordinateur avec un processeur est prévu comme ordinateur d'hôte pour l'exécution d'opérations de calcul critiques en temps, un coprocesseur est de plus prévu dans l'ordinateur pour accélérer les calculs, des opérations de calcul critiques en temps étant transférées dans ledit coprocesseur, le coprocesseur est réalisé sur une carte d'insertion pour ordinateurs (1) comprenant un interface ordinateur (2) réalisable comme interface standardisé de type USB, RS232, PCI, PCI-Express, Ethernet, Hyper Transport, Serial-ATA ou LVDS, un élément FPGA (Field Programmable Gate Array) (3) comprenant une unité arithmétique et une mémoire externe (4) additionnelle, la structure du coprocesseur est adaptée à l'algorithme à exécuter, qui calcule chaque ligne spectrale séparément, correspondant aux équations mentionnées dans la revendication 1

$$\kappa_m(\nu, p(z), T(z)) \;=\; \sum_l S_l\big(T(z)\big)\, g\big(\nu; \hat{\nu}_l, \gamma_l(p(z), T(z))\big)$$

$$g_{\mathrm{V}}(\nu;\; \hat{\nu}, \gamma_{\mathrm{L}}, \gamma_{\mathrm{D}}) \;=\; \frac{\sqrt{\ln 2/\pi}}{\gamma_{\mathrm{D}}}\, K(x, y)$$

et

$$K(x, y) \quad = \quad \frac{r(x)}{t(x)} \;=\; \frac{\sum\limits_{j=0}^{6} \rho_j(y)\, x^{2j}}{\sum\limits_{j=0}^{7} \tau_j(y)\, x^{2j}}$$

les résultats pour chaque point de grille sont stockées dans la mémoire externe de la carte d'insertion pour ordinateur, et des termes de somme calculés de nouveau pour un point de grille sont respectivement additionnés à la valeur de somme déjà stockée pour le point de grille pertinent.

7. Dispositif matériel selon la revendication 6, **caractérisé en ce que**, dans l'élément FPGA (3) comprenant ladite unité arithmétique, deux boucles sont parcourus pour calculer la somme de toutes les lignes spectrales, que le boucle externe à travers les lignes spectrales fournit pour cela toutes les valeurs nécessaires pour exécuter le boucle interne à travers les points de grille du nombre d'onde, que, pour cela, les valeurs caractéristiques d'une ligne spectrale sont retrouvées dans la mémoire externe et sont stockée dans un registre, qu'en outre les coefficients $\rho$ et $\tau$ et, le cas échéant, $\sigma$ des polynômes numérateurs et dénominateurs sont calculés, que ces actions sont exécutés seulement une fois par chaque passage du boucle interne, en conséquence, l'unité arithmétique pertinente est configurée comme unité arithmétique sérielle, que le boucle interne est critique en temps de façon maximale, en conséquence, cette unité arithmétique est configurée comme pipeline entièrement parallèle, que les activités de ladite unité arithmétique sérielle pour ledit boucle externe peuvent être exécutées pendant l'exécution dudit boucle interne, ainsi déjà fournissant les valeurs pour le prochain passage par le boucle interne, et que toutes opérations sont commandées par une commande de déroulement centrale qui est aussi chargée de la communication avec l'ordinateur d'hôte et avec la mémoire externe (4).

8. Dispositif matériel selon les revendications 6 et 7, **caractérisé en ce que** ladite unité arithmétique pour ledit boucle externe comprend une commande de déroulement propre et communique avec ladite commande de déroulement centrale, que, selon les exigences, les additionneurs et les multiplicateurs prévus peuvent représenter des unités à virgule fixe ("Fixed Point") ou à virgule flottante ("Floating Point"), que les ligne de données prévues sont des busses ayant le largeur de mot nécessaire, que les coefficients $\phi_{i,j}$ et $\psi_{i,j}$ pour le calcul des polynômes $\rho_j(y)$ et $\tau_j(y)$

sont constants et sont stockés de manière permanente dans l'élément FPGA (3) avec le largeur de mot nécessaire et dans le format correspondant, autant que les dégrées de polynôme pour chaque polynôme à calculer, que la commande de déroulement locale génère les signaux de commande pour commander l'addition sérielle et la multiplication sérielle et génère les adresses pour le ROM de coefficients et le ROM de dégrées de polynôme, que l'architecture sérielle présentée réalise le schéma de Horner, et que le résultat de chaque calcul est stocké dans un registre (registre polynôme de numérateur/dénominateur) auquel peut accéder ladite unité arithmétique pour le calcul du boucle interne.

9. Dispositif matériel selon la revendication 8, **caractérisé en ce que**, pour calculer les coefficients des polynômes, l'unité arithmétique est prévue avec des étages multiplicateur/additionneur connectées de manière appropriée, que lesdites étages sont formées soit par des portes et bascules individuelles sous forme de ressources FPGA, soit comme des blocs fonctionnels préfabriqués sous forme de blocs DSP, de blocs multiplicateur ou de blocs MAC ou comme blocs IP spécifiques au producteur ou obtenus autrement, et que le calcul des coefficients des polynômes est effectué de manière sérielle dans les étages multiplicateur/additionneur, utilisant chaque fois une seule étage multiplicateur/additionneur, et que le coefficient complet est réalisé par enregistrement temporaire séquentiel et addition dans un registre.

10. Dispositif matériel selon la revendication 7, **caractérisé en ce que** ladite unité arithmétique pour le boucle interne est prévue pour remplir les fonctions suivantes:

  • la génération de $x^2$ à partir d'une valeur initiale du nombre d'onde convertie de manière appropriée et d'une valeur, convertie de la même façon, pour l'incrément du nombre d'onde à l'aide d'une structure additionneur-registre-(accumulateur);
  • le calcul du polynôme du numérateur et du dénominateur à partir de $x^2$ et des coefficients du numérateur et du dénominateur calculés dans ladite unité arithmétique à coefficients (boucle externe);
  • la formation du quotient;
  • l'addition et l'enregistrement dans la mémoire externe (4).

11. Dispositif matériel selon la revendication 10, **caractérisé en ce que** ladite unité arithmétique pour ledit boucle interne comprend une commande de déroulement propre et communique avec ladite commande de déroulement centrale, que, selon l'application, toutes les unités arithmétiques et lignes de données prévues peuvent représenter des valeurs à virgule fixe ou à virgule flottante d'une longueur de mot appropriée, que les structure de chaine réalisent le schéma de Horner, les coefficients étant fournis à partir du registre de coefficients dont le contenu est calculé dans ladite unité arithmétique du boucle externe, que le numérateur et le dénominateur sont formés en parallèle dans des chaines multiplicateur/additionneur séparées, et qu'une étage diviseur/multiplicateur/additionneur est disposée en aval des chaines multiplicateur/additionneur, les valeurs calculées par le diviseur et le multiplicateur étant additionnées à la valeur située à l'adresse de mémoire externe relative au point de grille pertinent, ladite valeur étant, pour cela, lue dans la mémoire externe, additionnée au résultat actuel, et enregistrée de nouveau à la même adresse.

12. Dispositif matériel selon la revendication 10, **caractérisé en ce que** ladite unité arithmétique pour ledit boucle interne comprend une commande de déroulement propre et communique avec ladite commande de déroulement centrale, que, selon l'application, toutes les unités arithmétiques et lignes de données prévues peuvent représenter des valeurs à virgule fixe ou à virgule flottante d'une longueur de mot appropriée, que les structure de chaine réalisent le schéma de Horner, les coefficients étant fournis à partir du registre de coefficients dont le contenu est calculé dans ladite unité arithmétique du boucle externe, que le numérateur et le dénominateur sont formés de tour à tour dans une chaine multiplicateur/additionneur, les registres pour les coefficients $\rho_i$ et $\tau_i$ étant, pour cela, changés à l'aide de multiplexeurs, qu'à la sortie de ladite unité arithmétique un registre de numérateur et un registre de dénominateur sont prévus, respectivement, pour l'enregistrement temporaire de valeurs cumulées du numérateur et du dénominateur, qu'une étage diviseur/multiplicateur/additionneur est disposée en aval des chaines multiplicateur/additionneur, la division étant exécutée dans le diviseur quand les deux registre sont chargés avec des valeurs valides, et les valeurs calculées par le diviseur et le multiplicateur étant additionnées à la valeur située à l'adresse de mémoire externe relative au point de grille pertinent, ladite valeur étant, pour cela, lue dans la mémoire externe, additionnée au résultat actuel, et enregistrée de nouveau à la même adresse, et que la division dans le diviseur est effectuée chronologiquement en parallèle avec le recalcul d'un pair de valeurs dans la chaine multiplicateur/additionneur.

13. Dispositif matériel selon les revendications 11 ou 12, **caractérisé en ce que** les unités arithmétiques sont des unités arithmétiques du type pipeline, c'est à dire qu'une période de latence de plusieurs horloges existe entre l'entrée de données et la sortie de données valides, la période de latence étant compensée pour l'opérande $x^7$ par des mémoires FIFO intermédiaires, afin que les opérandes correspondants apparaissent à chaque point des chaines multiplicateur/additionneur, que ladite étage diviseur/multiplicateur/additionneur prévue en aval est aussi configurée comme une pipeline, et que toutes les unités arithmétiques du type pipeline sont configurées de manière que le temps de traitement respectif comprend le même nombre de cycles d'horloge.

14. Dispositif matériel selon l'une quelconque des revendications 11 à 13, **caractérisé en ce que** les étages multiplicateur/additionneur individuelles des chaines multiplicateur/additionneur sont formées soit par des portes et bascules individuelles sous forme de ressources FPGA, soit comme des blocs fonctionnels préfabriqués sous forme de blocs DSP, de blocs multiplicateur ou de blocs MAC ou comme blocs IP spécifiques au producteur ou obtenus autrement, et qu'une unité de division pipeline, un additionneur et un multiplicateur sont prévus pour le calcul des valeurs initiales (termes de somme), une adresse de mémoire existant dans la mémoire externe (4) pour chaque point de grille, de laquelle adresse ladite valeur enregistrée respective est lue, est additionnée à la valeur actuellement calculée et est enregistrée de nouveau.

15. Dispositif matériel selon l'une quelconque des revendications 6 à 14, **caractérisé en ce que** les paramètres des lignes spectrales fournis à l'unité arithmétique du coprocesseur soit complètement avant le calcul d'un spectre, soit alternativement pendant le calcul d'un spectre, dans une séquence temporelle correspondant à l'exécution interne, sont enregistrées complètement ou partiellement dans la mémoire interne au FPGA ou alternativement dans la mémoire (4) externe au FPGA.

EP 2 093 547 B1

FPGA–Einsteckkarte

1

PC Interface

2

FPGA–Baustein

3

7    Control

6    Data

Externer Speicher

4

## Fig.1

Rechenwerk Blockdiagramm

Fig.2

EP 2 093 547 B1

Rechenwerk Zähler- Nennerkoeffizienten

Ablaufsteuerung äußere Schleife

ctrl

Steuersignale    Steuersignale

Adresse    Daten    Adresse    Daten

| Ctrl | Dout |
|------|------|
| 13 |  |
| ... |  |
| 2 |  |

Polynomgrad-
ROM

| Ctrl | Dout |
|------|------|
| phi(0,13) |  |
| ... |  |
| phi(0,0) |  |
| ... |  |
| phi(6,1) |  |
| phi(6,0) |  |
| psi(0,13) |  |
| ... |  |
| psi(0,0) |  |
| psi(6,2) |  |
| ... |  |
| psi(6,0) |  |

Koeffizienten-
ROM

+

*

y_ Linie

| Din | load | Dout |
|-----|------|------|

Register

Din  Ctrl   Dout

Dout

| ρ(6) |
|------|
| ... |
| ρ(0) |
| τ(6) |
| ... |
| τ(0) |

Register
Zähler-
Nenner-
Polynom

vom Register Linienparameter

# Fig.3

EP 2 093 547 B1

Fig.4

Ablaufsteuerung lokal

Adresse, Steuersignale von zentraler Ablaufsteuerung

Quotientenbildung und Abspeichern

EP 2 093 547 B1

Fig.5

EP 2 093 547 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2003025552 A1
- WO 1998027416 A1
- US 20060082778 A1
- DE 102005060245 B3

### In der Beschreibung aufgeführte Nicht-Patentliteratur

- The Voigt and complex error function: A comparison of computational methods. **SCHREIER et al.** JOURNAL OF QUANTITATIVE SPECTROSCOPY AND RADIATIVE TRANSFER. ELSEVIER SCIENCE, 01. November 1992, vol. 48, 743-762
- Rapid computation of the Voigt and complex error functions. **HUI A K et al.** JOURNAL OF QUANTITATIVE SPECTROSCOPY AND RADIATIVE TRANSFER. ELSEVIER SCIENCE, 01. Mai 1978, vol. 19, 509-519
- Optimized computation of the voigt and complex probability functions. **HUMLICEK et al.** JOURNAL OF QUANTITATIVE SPECTROSCOPY AND RADIATIVE TRANSFER. ELSEVIER SCIENCE, 01. April 1982, vol. 27, 437-444